# EUROPEAN PATENT APPLICATION

(11) **EP 4 685 990 A1**
(43) Date of publication of application: **28.01.2026**
(21) Application number: 24875992.0
(22) Date of filing: 06.05.2024
(51) Int. Cl.: H01M 50/543

(54) **BATTERY CELL AND BATTERY HAVING SAME, AND ELECTRIC DEVICE**

(30) Priority: 10.10.2023 CN 202311309420
(71) Applicant: Contemporary Amperex Technology Co., Limited, Ningde, Fujian 352100 (CN)
(72) Inventor: WU, Kai, Ningde, Fujian 352100 (CN); LIN, Denghua, Ningde, Fujian 352100 (CN); CHEN, Wenwei, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Kraus & Lederer PartGmbB
(86) International application number: PCT/CN2024/091278
(87) International publication number: WO 2025/077165

(57) **Abstract**

Disclosed are a battery cell and a battery having the same, and an electrical apparatus. The battery cell includes: a case including a mounting wall; an electrode assembly disposed within the case; an explosion-proof valve disposed on the mounting wall; and a gas guide portion including a gas guide groove formed in the mounting wall, the gas guide groove being configured to guide gas generated by the electrode assembly toward the explosion-proof valve. In the technical solutions of the embodiments of the present application, air inside the case can be guided to flow toward the explosion-proof valve by providing the gas guide groove on the mounting wall, facilitating improving the exhaust efficiency of the battery cell, and improving the pressure relief efficiency of the battery cell. As compared to separately providing a gas guide assembly inside the battery cell, providing the gas guide groove in the mounting wall to form the gas guide portion facilitates reducing space occupied by the gas guide portion within the battery cell.

## Description

### CROSS-REFERENCE TO RELATED APPLICATION

The present application is filed based on and claims priority to Chinese Patent Application No. 202311309420.3, filed on October 10, 2023, the entire content of which is incorporated herein by reference.

### TECHNICAL FIELD

The present application relates to the field of battery technologies, and particularly, to a battery cell and a battery having the battery cell, and an electrical apparatus.

### BACKGROUND

With energy saving and emission reduction being the key to the sustainable development of the automobile industry, electric vehicles have become an important part of the sustainable development of automotive industry due to their advantages of energy saving and environmental protection. For electric vehicles, battery technology is an important factor related to their development. In battery cells of related technologies, when thermal runaway occurs, the pressure relief speed of the battery cell is slow.

### SUMMARY

In view of the aforementioned problem, the present application provides a battery cell and a battery having the same, and an electrical apparatus. By providing a gas guide groove on a mounting wall, the gas guide groove can guide air inside a case to flow toward an explosion-proof valve, facilitating improving the exhaust efficiency of the battery cell and achieving rapid pressure relief for the battery cell. As compared to separately providing a gas guide assembly inside the battery cell, providing the gas guide groove in the mounting wall to form the gas guide portion facilitates reducing space occupied by the gas guide portion within the battery cell.

In a first aspect, the present application provides a battery cell, including: a case including a mounting wall; an electrode assembly disposed within the case; an explosion-proof valve disposed on the mounting wall; and a gas guide portion including a gas guide groove formed in the mounting wall, the gas guide groove being configured to guide gas generated by the electrode assembly toward the explosion-proof valve.

In the technical solution of the embodiments of the present application, the gas guide groove and the explosion-proof valve are both disposed on the mounting wall, such that the gas guide groove is disposed near the explosion-proof valve. This enables the gas guide groove to conveniently and rapidly guide gas to the vicinity of the explosion-proof valve. Consequently, when the gas inside the battery cell reaches a critical value, the gas can rapidly gather near the explosion-proof valve and rupture the explosion-proof valve, thereby achieving rapid pressure relief for the battery cell. As compared to separately providing a gas guide assembly inside the battery cell, providing the gas guide groove in the mounting wall to form the gas guide portion facilitates reducing space occupied by the gas guide portion within the battery cell.

In some embodiments, the explosion-proof valve includes a pressure relief groove formed in the mounting wall. In the aforementioned technical solution, by providing the pressure relief groove on the mounting wall, a wall surface with lower structural strength can be formed on the mounting wall. When gas pressure inside the battery cell reaches a critical value, the gas preferentially ruptures the wall surface with lower structural strength on the mounting wall, thereby damaging the explosion-proof valve, which enables communication between the interior of the battery cell and an external environment, allowing gas inside the battery cell to reach the external environment, and achieving pressure relief for the battery cell.

In some embodiments, a depth of the gas guide groove is less than a depth of the pressure relief groove. In the aforementioned technical solution, when gas pressure inside the battery cell reaches a critical value, the gas preferentially ruptures a wall portion of the mounting wall that corresponds to the pressure relief groove, facilitating reducing the possibility of the gas rupturing a wall portion of the mounting wall that corresponds to the gas guide groove, and facilitating reducing the influence of the gas guide groove on the explosion-proof valve.

In some embodiments, the gas guide groove and the pressure relief groove are both disposed on a side of the mounting wall facing an inner cavity of the case. In the aforementioned technical solution, by locating the gas guide groove and the pressure relief groove on the same side, the gas guide groove can guide gas into the pressure relief groove, enabling uniform distribution of gas within the pressure relief groove. Consequently, the gas is uniformly gathered at the explosion-proof valve, such that when the gas pressure inside the battery cell reaches a critical value, a relatively large opening is formed when the gas ruptures the explosion-proof valve, thereby facilitating achieving rapid pressure relief for the battery cell.

In some embodiments, the gas guide groove is disposed on a side of the mounting wall facing an inner cavity of the case, and the pressure relief groove is disposed on a side of the mounting wall facing away from the inner cavity of the case. In the aforementioned technical solution, the side of the mounting wall facing away from the inner cavity of the case is an outer side of the case, such that a position of the pressure relief groove on the case is easily identified, thereby facilitating confirming the position of the explosion-proof valve. During installation of the battery cell, this facilitates determining a relative position of the battery cell using the position of the explosion-proof valve.

In some embodiments, the gas guide groove is spaced apart from the pressure relief groove. In the aforementioned technical solution, this can enable a wall thickness of the spacing portion between the gas guide groove and the pressure relief groove on the mounting wall to remain unchanged, thereby ensuring structural strength of the mounting wall. This facilitates reducing the possibility of deformation of the mounting wall, enabling the gas guide groove on the mounting wall to smoothly guide gas toward the pressure relief groove.

In some embodiments, the gas guide groove is in communication with the pressure relief groove. In the aforementioned technical solution, gas may flow directly along the gas guide groove into the pressure relief groove, which facilitates improving the gas guiding efficiency and achieves rapid pressure relief for the battery cell.

In some embodiments, the pressure relief groove includes a first pressure relief groove segment and a second pressure relief groove segment arranged in an intersecting configuration. In the aforementioned technical solution, this facilitates achieving communication between the first pressure relief groove segment and the second pressure relief groove segment while increasing the area of the explosion-proof valve. This enables gas to be uniformly distributed within the first pressure relief groove segment and the second pressure relief groove segment, such that when the gas pressure inside the battery cell reaches a critical value, a relatively large opening is formed when the gas ruptures the explosion-proof valve, thereby facilitating achieving rapid pressure relief for the battery cell.

In some embodiments, the first pressure relief groove segment extends along a length direction of the mounting wall, and the second pressure relief groove segment extends along a width direction of the mounting wall. In the aforementioned technical solution, an angle formed between the first pressure relief groove segment and the second pressure relief groove segment is 90°, which facilitates reducing the resistance encountered by gas when flowing between the first pressure relief groove segment and the second pressure relief groove segment, thereby enabling gas to be rapidly and uniformly distributed within the first pressure relief groove segment and the second pressure relief groove segment.

In some embodiments, the gas guide groove and the explosion-proof valve are arranged along a length direction of the mounting wall, and the gas guide groove includes: a first gas guide groove segment, the first gas guide groove segment extending along the length direction of the mounting wall. In the aforementioned technical solution, gas can flow along the first gas guide groove segment from one end in the length direction of the mounting wall toward the explosion-proof valve, so as to guide gas from an end portion of the battery cell further from the explosion-proof valve toward the explosion-proof valve, enabling the gas to gather at the explosion-proof valve.

In some embodiments, there are a plurality of the first gas guide groove segments, and the plurality of first gas guide groove segments are spaced apart along a width direction of the mounting wall. In the aforementioned technical solution, this facilitates increasing a gas guiding range of the gas guide groove, thereby facilitating increasing the gas guiding efficiency of the gas guide groove, enabling the gas guide groove to rapidly guide gas toward the pressure relief groove, and further facilitating improving the pressure relief speed.

In some embodiments, in each of the gas guide grooves, a distance between any two adjacent ones of the first gas guide groove segments is equal. In the aforementioned technical solution, the plurality of first gas guide groove segments can uniformly guide gas generated by the electrode assembly, thereby uniformly guiding the gas toward the explosion-proof valve.

In some embodiments, in each of the gas guide grooves, a distance between at least two adjacent ones of the first gas guide groove segments is not equal to a distance between another two adjacent ones of the first gas guide groove segments. In the aforementioned technical solution, in some cases, the volume of gas generated at a portion of regions within the battery cell may be large; therefore, dense arrangement of a plurality of first gas guide segments at corresponding regions on the mounting wall along the width direction of the mounting wall can increase the efficiency of flow guiding for gas at these regions, so as to smoothly guide the gas to the explosion-proof valve.

In some embodiments, the gas guide groove further includes: a second gas guide groove segment, the second gas guide groove segment extending along a width direction of the mounting wall, where one end of the first gas guide groove segment away from the explosion-proof valve is in communication with the second gas guide groove segment and the other end extends toward the explosion-proof valve. In the aforementioned technical solution, providing the second gas guide groove segment facilitates increasing the volume of the gas guide groove, enabling the gas guide groove to accommodate more gas, thereby facilitating improving the flow guiding efficiency, where gas in the second gas guide groove can enter the first gas guide groove and flow toward the explosion-proof valve along the first gas guide groove.

In some embodiments, two said gas guide portions are provided, the two gas guide portions being spaced apart in a length direction of the mounting wall, and the explosion-proof valve being located between the two gas guide portions. In the aforementioned technical solution, this enables gas located at two ends of the explosion-proof valve to flow toward the explosion-proof valve along corresponding gas guide grooves, thereby facilitating improving the gas guiding efficiency and improving the pressure relief speed of the battery cell.

In some embodiments, the explosion-proof valve is disposed at a central position in the length direction of the mounting wall, and the two gas guide portions have the same structure and are arranged symmetrically about a center of the explosion-proof valve. In the aforementioned technical solution, the two gas guide portions can uniformly guide gas on the two sides of the explosion-proof valve toward the explosion-proof valve, facilitating reducing the possibility of blockage of gas flows within gas guide channels, thereby facilitating improving the gas guiding efficiency and improving the pressure relief efficiency of the battery cell.

In some embodiments, the mounting wall has a first end and a second end opposite to each other in the length direction of the mounting wall, a distance between the explosion-proof valve and the first end being greater than a distance between the explosion-proof valve and the second end, where the area of the gas guide portion located between the explosion-proof valve and the first end is greater than the area of the gas guide portion located between the explosion-proof valve and the second end. In the aforementioned technical solution, this facilitates adaptively increasing the area of the gas guide portion at a portion of regions of the mounting wall, facilitating improving the flow guiding efficiency in the portion of regions, so as to adapt to a situation where the volume of gas at a certain region inside the battery cell is large.

In some embodiments, the case includes a case cover and a case body having an opening, the case cover being disposed to cover the opening, and the mounting wall being located on the case cover or the case body. In the aforementioned technical solution, when gas inside the battery cell reaches a critical value, the gas can rupture the explosion-proof valve on the mounting wall, thereby achieving pressure relief for the battery cell.

In some embodiments, the case includes a case cover and a case body having an opening, the case cover being disposed to cover the opening, and the mounting wall being located on the case cover, where a wall body of the case body opposite to the mounting wall is provided with a terminal post, the terminal post being provided with an accommodation portion; and the electrode assembly includes an active material-coated portion and a conductive portion connected to the active material-coated portion, at least a portion of the conductive portion extending into the accommodation portion and being connected to the terminal post. In the aforementioned technical solution, by accommodating at least a portion of the conductive portion within the accommodation portion, space occupied by the battery cell itself can be reduced, which enables a battery having the same volume to accommodate a larger number of battery cells, and also increases the volumetric energy density of the battery; additionally, accommodating at least a portion of the conductive portion within the accommodation portion to occupy space within the terminal post can reduce the redundancy of the conductive portion within the case to at least some extent, reduce the probability of short circuits between the conductive portion and the active material-coated portion, and reduce the probability of short circuits of the battery cell, thereby improving the operational reliability and stability of the battery cell and the battery.

In some embodiments, the accommodation portion includes a first accommodation groove, and a surface of a side of the terminal post facing the active material-coated portion is a terminal post inner end surface, where a groove opening of the first accommodation groove is formed on the terminal post inner end surface, and at least a portion of the conductive portion is accommodated within the first accommodation groove. In the aforementioned technical solution, on the one hand, providing the first accommodation groove on the terminal post can reduce the weight of the terminal post to some extent, thereby increasing the gravimetric energy density of the battery cell and the battery. On the other hand, since the groove opening of the first accommodation groove is formed on the terminal post inner end surface, and the terminal post inner end surface is a surface of a side of the terminal post close to the active material-coated portion, the first accommodation groove can open toward a direction of the active material-coated portion, thereby facilitating extension of the conductive portion into the first accommodation groove and improving the assembly efficiency. Moreover, the first accommodation groove in this form facilitates machining and improves the production efficiency.

In some embodiments, the accommodation portion includes a second accommodation groove, and a surface of a side of the terminal post away from the active material-coated portion is a terminal post outer end surface, where a groove opening of the second accommodation groove is formed on the terminal post outer end surface, the second accommodation groove is in communication with an interior of the case through a penetration hole, and the conductive portion passes through the penetration hole and at least a portion thereof is accommodated within the second accommodation groove. In the aforementioned technical solution, on the one hand, providing the second accommodation groove on the terminal post can reduce the weight of the terminal post to some extent, thereby increasing the gravimetric energy density of the battery cell and the battery. On the other hand, since the groove opening of the second accommodation groove is formed on the terminal post outer end surface, and the terminal post outer end surface is a surface of a side of the terminal post away from the active material-coated portion, the second accommodation groove can open toward a direction facing away from the active material-coated portion. Thus, when accommodating at least a portion of the conductive portion within the second accommodation groove, it is easy to achieve storage arrangement of the conductive portion through the groove opening of the second accommodation groove, and it is easy to perform an electrical connection operation between the conductive portion and the terminal post through the groove opening of the second accommodation groove, thereby reducing the production difficulty of the battery cell and improving the production efficiency of the battery cell.

In a second aspect, the present application provides a battery, including the battery cell according to the aforementioned embodiments. By providing a gas guide groove on a mounting wall, the gas guide groove can guide air inside a case to flow toward an explosion-proof valve, facilitating improving the exhaust efficiency of the battery cell and achieving rapid pressure relief for the battery cell. As compared to separately providing a gas guide assembly inside the battery cell, providing the gas guide groove in the mounting wall to form the gas guide portion facilitates reducing space occupied by the gas guide portion within the battery cell.

In a third aspect, the present application provides an electrical apparatus, including the battery according to the aforementioned embodiments. By providing a gas guide groove on a mounting wall, the gas guide groove can guide air inside a case to flow toward an explosion-proof valve, facilitating improving the exhaust efficiency of the battery cell and achieving rapid pressure relief for the battery cell. As compared to separately providing a gas guide assembly inside the battery cell, providing the gas guide groove in the mounting wall to form the gas guide portion facilitates reducing space occupied by the gas guide portion within the battery cell.

The above description is only an overview of the technical solution of the present application. In order to better understand the technical means of the present application and thus implement them according to the contents of the specification, and in order to make the aforementioned and other objectives, features, and advantages of the present application more obvious and understandable, detailed description of the present application will be made specifically below.

### BRIEF DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the drawings:
FIG. 1 is a schematic structural diagram of a vehicle according to some embodiments of the present application;
FIG. 2 is an exploded view of a battery according to some embodiments of the present application;
FIG. 3 is a schematic structural diagram of a battery cell according to some embodiments of the present application;
FIG. 4 is a structural cross-sectional view of a battery cell provided in some embodiments of the present application;
FIG. 5 is a structural exploded view of a battery cell according to some embodiments of the present application;
FIG. 6 is a schematic structural diagram of a battery cell according to some embodiments of the present application;
FIG. 7 is a schematic structural diagram of a mounting wall according to some embodiments of the present application;
FIG. 8 is a schematic structural diagram of a mounting wall according to some embodiments of the present application;
FIG. 9 is a cross-sectional view taken along A-A in FIG. 8;
FIG. 10 is an enlarged view of a partial region in FIG. 9;
FIG. 11 is a schematic structural diagram of a mounting wall according to some embodiments of the present application;
FIG. 12 is a schematic structural diagram of a mounting wall according to some embodiments of the present application;
FIG. 13 is a schematic structural diagram of a mounting wall according to some embodiments of the present application;
FIG. 14 is a schematic structural diagram of a mounting wall according to some embodiments of the present application;
FIG. 15 is a schematic structural diagram of a battery cell according to some embodiments of the present application;
FIG. 16 is a cross-sectional view taken along B-B in FIG. 15;
FIG. 17 is a partial schematic cross-sectional view of a battery cell provided in some embodiments of the present application;
FIG. 18 is a partial schematic cross-sectional view of a battery cell provided in some embodiments of the present application;
FIG. 19 is a partial schematic cross-sectional view of a battery cell provided in some embodiments of the present application;
FIG. 20 is a partial schematic cross-sectional view of a battery cell provided in some embodiments of the present application;
FIG. 21 is a partial schematic cross-sectional view of a battery cell provided in some embodiments of the present application; and
FIG. 22 is a partial schematic cross-sectional view of a battery cell provided in some embodiments of the present application.

Reference numerals: vehicle 1000;
battery 100, controller 200, motor 300;
battery cell 10;
case 11, case body 111, opening 1110, case cover 112, through hole 113, mounting wall 114, first wall portion 1143, second wall portion 1144, mounting hole 115;
terminal post 12, positive terminal post 1201, negative terminal post 1202, accommodation portion 121, first accommodation groove 12110, first end wall 12111, first sunk groove 12112, first side wall 12113, second accommodation groove 12120, second end wall 12121, second sunk groove 12122, second side wall 12123, penetration hole 12130, terminal post inner end surface 122, terminal post outer end surface 123, first groove 126, spacing portion 127, ring-shaped groove 128;
cover plate 13, first conductive member 131, second groove 1311, second conductive member 132;
box body 20, first portion 201, second portion 202;
electrode assembly 2, active material-coated portion 21, conductive portion 22;
bracket 3, through opening 314, insulating member 4, explosion-proof valve 6, pressure relief groove 60, first pressure relief groove segment 61, second pressure relief groove segment 62, groove cover 7, gas guide portion 80, gas guide groove 81, first gas guide groove segment 811, second gas guide groove segment 812.

### DETAILED DESCRIPTION

Embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms " including" and " having" and any variations thereof in the specification and claims of the present application and the aforementioned BRIEF

### DESCRIPTION OF DRAWINGS are intended to cover non-exclusive inclusion.

In the description of the embodiments of the present application, the technical terms " first" , " second" , etc., are used only to distinguish between different objects and are not to be understood as indicating or implying a relative importance or implicitly specifying the number, particular order, or primary and secondary relationship of the technical features indicated. In the description of the embodiments of the present application, the meaning of " a plurality of' is two or more, unless otherwise explicitly and specifically defined.

Reference herein to " an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term " and/or" is simply a description of an association of associated objects, which indicates that there may exist three relationships, for example, A and/or B may represent three situations: A exists alone, both A and B exist, and B exists alone. Moreover, the character " /" herein generally indicates that the context objects are in an " or" relationship.

In the description of the embodiments of the present application, the term " a plurality of" refers to more than two (including two), and similarly, " a plurality of groups" refers to more than two groups (including two groups); and " a plurality of sheets" refers to more than two sheets (including two sheets).

In the description of the embodiments of the present application, the orientation or positional relationships indicated by the technical terms " center" , " longitudinal" , " transverse" , " length" , " width" , " thickness" , " upper" , " lower" , " front" , " back" , " left" , " right" , " vertical" , " horizontal" , " top" , " bottom" , " inner" , " outer" , " clockwise" , " counterclockwise" , " axial" , " radial" , " circumferential" , etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise specified and limited, the technical terms " mounting" , " connection" , " connection" , and " fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the market demand is also constantly expanding.

The battery cell is typically provided with an explosion-proof valve. The explosion-proof valve is configured to release internal pressure of the battery cell when the internal pressure or temperature of the battery cell reaches a threshold value. In battery cells of related technologies, it takes a relatively long time for gas to flow to the explosion-proof valve and to be discharged from the explosion-proof valve to achieve pressure relief for the battery cell. In other words, the speed of pressure relief for the battery cell is relatively slow, and the pressure relief duration is relatively long.

To improve the pressure relief speed of the battery cell, the present application provides a gas guide groove near the explosion-proof valve. The gas guide groove is configured to guide gas within the battery cell, enabling the gas to flow along the gas guide groove toward the explosion-proof valve. This facilitates orderly discharge of gas from the explosion-proof valve, thereby improving the exhaust speed of the battery cell and enhancing the pressure relief speed of the battery cell.

The battery disclosed in the embodiments of the present application is used as a power source for an electrical apparatus or in various energy storage systems that use batteries as energy storage elements. The electrical apparatus may be, but is not limited to, a mobile phone, a tablet, a laptop, an electric toy, an electric tool, a battery vehicle, an electric vehicle, a ship, a spacecraft, and so on. Among them, the electric toy may include a stationary or mobile electric toy, for example, a game console, an electric car toy, an electric ship toy, and an electric aircraft toy, and the like, and the spacecraft may include an aircraft, a rocket, a space shuttle and a spaceship, and the like.

For the convenience of description in the following embodiments, an electrical apparatus being a vehicle 1000 according to an embodiment of the present application is taken as an example for the description.

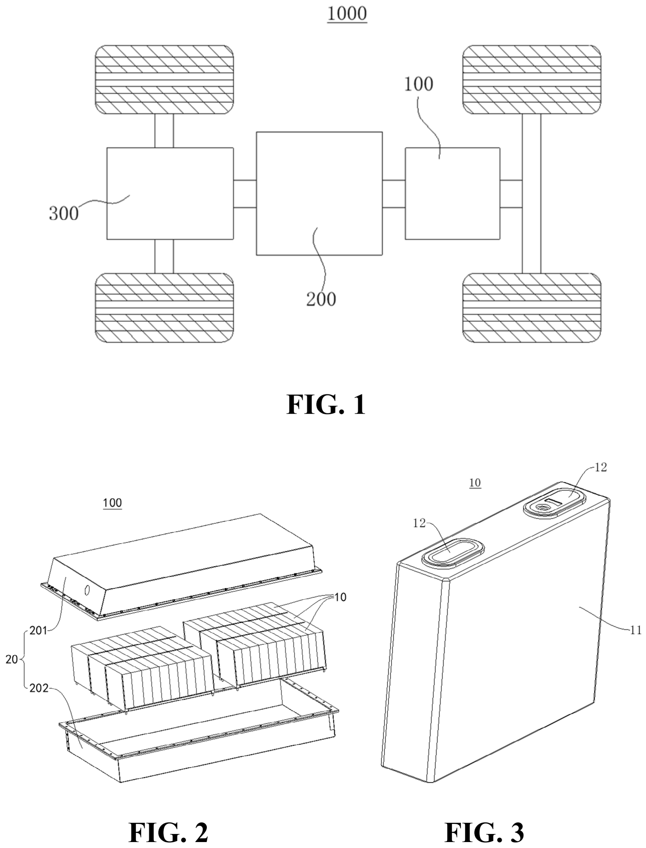

Referring to FIG. 1, FIG. 1 is a schematic structural diagram of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended range electric vehicle, or the like. A battery 100 is provided inside the vehicle 1000. The battery 100 may be provided at the bottom, or head, or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to FIG. 2. FIG. 2 is an exploded view of a battery 100 according to some embodiments of the present application. The battery 100 includes a box body 20 and a battery cell 10, where the battery cell 10 is accommodated within the box body 20. Here, the box body 20 is used to provide an accommodating space for the battery cell 10, and the box body 20 can be of various structures. In some embodiments, the box body 20 may include a first portion 201 and a second portion 202, the first portion 201 and the second portion 202 covering each other, and the first portion 201 and the second portion 202 together defining the accommodating space for accommodating the battery cell 10. The second portion 202 may be of a hollow structure with an opening at one end, and the first portion 201 may be of a plate-like structure, where the first portion 201 is capped on the opening side of the second portion 202 so that the first portion 201 and the second portion 202 together define the accommodating space; and the first portion 201 and the second portion 202 may each be of a hollow structure with an opening at one end, where the opening side of the first portion 201 is capped on the opening side of the second portion 202. Certainly, the box body 20 formed by the first portion 201 and the second portion 202 may be of various shapes, such as a cylinder, a cuboid, or the like.

In the battery 100, there may be a plurality of battery cells 10, and the plurality of battery cells 10 may be connected in series or in parallel or in parallel-series, where the parallel-series connection means that the plurality of battery cells 10 are connected in both series and parallel. The plurality of battery cells 10 may be directly connected together in series or in parallel or in parallel-series, and then the whole composed of the plurality of battery cells 10 may be accommodated within the box body 20. Certainly, the battery 100 may also be in the form that the plurality of battery cells 10 are firstly connected in series or in parallel or in parallel-series to form a battery module, and then a plurality of battery modules are connected in series or in parallel or in parallel-series to form a whole and are accommodated within the box body 20. The battery 100 may further include other structures. For example, the battery 100 may further include a busbar component configured to achieve electrical connections between the plurality of battery cells 10.

Each battery cell 10 may be a secondary battery or a primary battery; and may also be a lithiumsulfur battery, a sodium-ion battery, or a magnesium-ion battery, but is not limited thereto. The battery cells 10 may be cylindrical, flat, rectangular, or in other shapes.

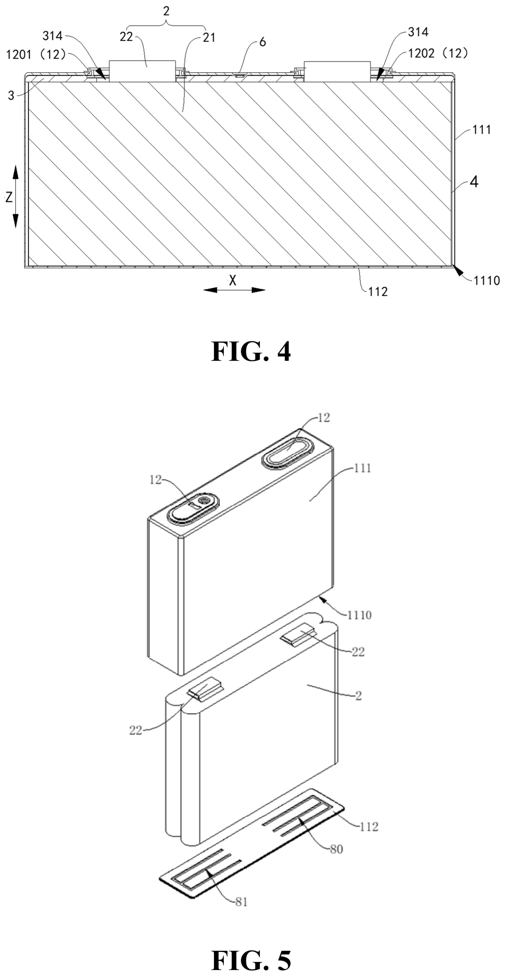

Please refer to FIG. 3 and FIG. 4. FIG. 3 is a schematic structural diagram of a battery cell 10 provided in some embodiments of the present application, and FIG. 4 is a structural cross-sectional view of a battery cell 10 provided in some embodiments of the present application. The battery cell 10 includes a case 11 and an electrode assembly 2, where the case 11 may include a case body 111 and a case cover 112.

The case cover 112 refers to a component that is disposed to cover an opening of the case body 111 to isolate the internal environment of the battery cell 10 from the external environment. Without limitation, the shape of the case cover 112 may be adapted to the shape of the case body 111 to cooperate with the case body 111. Optionally, the case cover 112 may be made of a material with certain hardness and strength (such as aluminum alloy), such that the case cover 112 is less prone to deformation when subjected to extrusion or collision, enabling the battery cell 10 to possess higher structural strength, and the reliability to be also improved.

The material of the case cover 112 may be various, for example, copper, iron, aluminum, stainless steel, aluminum alloy, plastic, etc., which is not specifically limited in the embodiments of the present application. In some embodiments, an insulating member may also be disposed on the inner side of the case cover 112, where the insulating member may be configured to isolate electrically connected components inside the case body 111 from the case cover 112, thereby reducing the risk of short circuits. As an example, the insulating member may be plastic, rubber, etc.

The case body 111 is a component for cooperating with the case cover 112 to form the internal environment of the battery cell 10, where the formed internal environment may be configured to accommodate the electrode assembly 2, electrolyte solution, and other components. Functional components such as a terminal post 12 are disposed on the case body 111. The terminal post 12 may be configured for electrical connection with the electrode assembly 2 for use in outputting or inputting electrical energy from or to the battery cell 10. The case 11 is provided with an explosion-proof valve 6. The explosion-proof valve 6 is configured to release internal pressure when the internal pressure or temperature of the battery cell 10 reaches a threshold.

The case body 111 and the case cover 112 may be independent components, where an opening 1110 may be provided on the case body 111, and at the opening 1110, the case cover 112 is disposed to cover the opening to form the internal environment of the battery cell 10. Without limitation, the case cover 112 and the case body 111 may also be integrated. Specifically, the case cover 112 and the case body 111 may first form a common connection surface before other components are placed into the case, and when it is necessary to seal the interior of the case body 111, the case cover 112 is then disposed to cover the case body 111.

The case body 111 may be of various shapes and sizes, such as cuboid, cylinder, hexagonal prism, etc. Specifically, the shape of the case body 111 may be determined according to the specific shape and size of the electrode assembly 2. The material of the case body 111 may be various, for example, copper, iron, aluminum, stainless steel, aluminum alloy, plastic, etc., which is not specifically limited in the embodiments of the present application.

The electrode assembly 2 is a component where electrochemical reactions occur within the battery cell 100. The case body 111 may contain one or more electrode assemblies 2. The electrode assembly 2 is primarily formed by winding or stacking a positive electrode plate and a negative electrode plate, with a separator usually provided between the positive electrode plate and the negative electrode plate. Portions of the positive electrode plate and the negative electrode plate having active material constitute a main body portion of the electrode assembly, and portions of the positive electrode plate and the negative electrode plate without active material respectively constitute tabs, where the positive tab and the negative tab may both be located at one end of the main body portion or respectively located at two ends of the main body portion. During charging and discharging of the battery 100, the positive electrode active material and the negative electrode active material react with the electrolyte solution, and the tabs are connected to the electrode terminals to form a current loop.

As shown in FIGS. 3 and 4, the battery cell 10 further includes a bracket 3, an insulating member 4, and an explosion-proof valve 6. The bracket 3 is disposed at one end of an active material-coated portion 21, the bracket 3 is provided with a through opening 314, and a tab 22 may pass through the through opening 314 to connect to a terminal post 12. The insulating member 4 is connected to the bracket 3 and collectively wraps around the circumference of the electrode assembly 2. The insulating member 4 may be configured to isolate electrically connected components inside the case 11 from the case 11 to reduce the risk of short circuits. As an example, the insulating member 4 may be plastic, rubber, etc. The insulating member 4 and the bracket 3 may be adhesively connected or thermally fused. Certainly, the insulating member 4 and the bracket 3 may also be connected by other means. The explosion-proof valve 6 is disposed on the case 11. The explosion-proof valve 6 is configured to release internal pressure when the internal pressure or temperature of the battery cell 10 reaches a threshold. The explosion-proof valve 6 may be disposed on the case cover 112, or may be disposed on the case body 111.

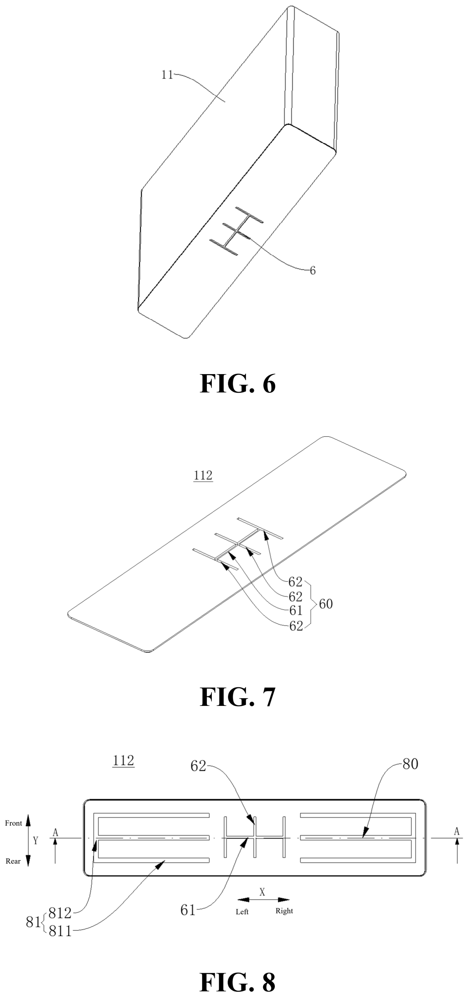

Please refer to FIGS. 5 and 6. FIG. 5 is an structural exploded view of a battery cell 10 according to some embodiments of the present application, and FIG. 6 is a schematic structural diagram of a battery cell 10 according to some embodiments of the present application. The present application provides a battery cell 10. The battery cell 10 includes a case 11, the case 11 including a mounting wall 114, where the mounting wall 114 refers to one wall body of the case 11.

The battery cell 10 further includes an electrode assembly 2, an explosion-proof valve 6, and a gas guide portion 80. The electrode assembly 2 is disposed within the case 11, the explosion-proof valve 6 is disposed on the mounting wall 114, and the gas guide portion 80 includes a gas guide groove 81, the gas guide groove 81 being formed in the mounting wall 114, where the gas guide groove 81 is configured to guide gas generated by the electrode assembly 2 toward the explosion-proof valve 6.

The electrode assembly 2 is a component where electrochemical reactions occur within the battery cell 10. During charging and discharging of the battery, the active material-coated portion 21 in the electrode assembly 2 reacts with the electrolyte solution and generates gas. When thermal runaway occurs in the battery cell 10, the gas expands upon heating, causing an increase in internal pressure within the battery cell 10.

The explosion-proof valve 6 is disposed on the mounting wall 114. When the pressure inside the battery cell 10 is higher than a critical value, the pressure inside the battery cell 10 can rupture the explosion-proof valve 6, at which point the interior of the case 11 communicates with the external environment to achieve pressure relief for the battery cell 10. Providing the explosion-proof valve 6 can enhance the safety of the battery cell 10 during use and reduces the likelihood of explosion of the battery cell 10.

The gas guide groove 81 is formed in the mounting wall 114. By performing laser cutting or computer numerical control (CNC) punching or other processing on the mounting wall 114, the gas guide groove 81 can be formed on the mounting wall 114, forming a space capable of accommodating gas on the mounting wall 114. Meanwhile, when the internal pressure of the battery cell 10 is high, under gas pressure, the gas guide groove 81 can guide gas generated by the electrode assembly 2 toward the explosion-proof valve 6, gathering the gas near the explosion-proof valve 6. Consequently, when the gas pressure inside the battery cell 10 reaches the critical value, the gas pressure inside the battery cell 10 can rapidly flow to the explosion-proof valve 6 and rupture the explosion-proof valve 6, achieving rapid pressure relief for the battery cell 10.

Here, the gas guide groove 81 and the explosion-proof valve 6 are both disposed on the mounting wall 114, such that the gas guide groove 81 is disposed near the explosion-proof valve 6. This enables the gas guide groove 81 to conveniently and rapidly guide gas to the vicinity of the explosion-proof valve 6. Consequently, when the gas inside the battery cell 10 reaches the critical value, the gas can rapidly gather at the explosion-proof valve 6 and rupture the explosion-proof valve 6, thereby achieving rapid pressure relief for the battery cell 10.

Furthermore, as compared to separately providing a gas guide component inside the battery cell 10, providing the gas guide groove 81 in the mounting wall 114 to form the gas guide portion 80 facilitates reducing space occupied by the gas guide portion 80 within the battery cell 10. This facilitates reserving larger space for the electrode assembly 2, thereby facilitating an increase in the capacity of the battery cell 10.

Please continue to refer to FIG. 6 and further refer to FIG. 7. FIG. 7 is a schematic structural diagram of a mounting wall 114 according to some embodiments of the present application. The explosion-proof valve 6 includes a pressure relief groove 60 provided in the mounting wall 114.

By performing laser cutting or CNC punching or other processing on the mounting wall 114, the pressure relief groove 60 can be formed on the mounting wall 114. The wall surface of the mounting wall 114 corresponding to the pressure relief groove 60 has a relatively smaller thickness, and thus the structural strength of this portion of region is relatively lower, such that when the gas pressure inside the battery cell 10 reaches a critical value, gas will preferentially rupture the relatively thinner wall surface of the mounting wall 114.

When the gas pressure inside the battery cell 10 reaches the critical value, gas will preferentially rupture the wall surface of the mounting wall 114 with relatively lower structural strength, that is, rupture the wall surface of the mounting wall 114 corresponding to the pressure relief groove 60, thereby destroying the explosion-proof valve 6. This enables communication between the interior of the battery cell 10 and the external environment, thereby achieving pressure relief for the battery cell 10.

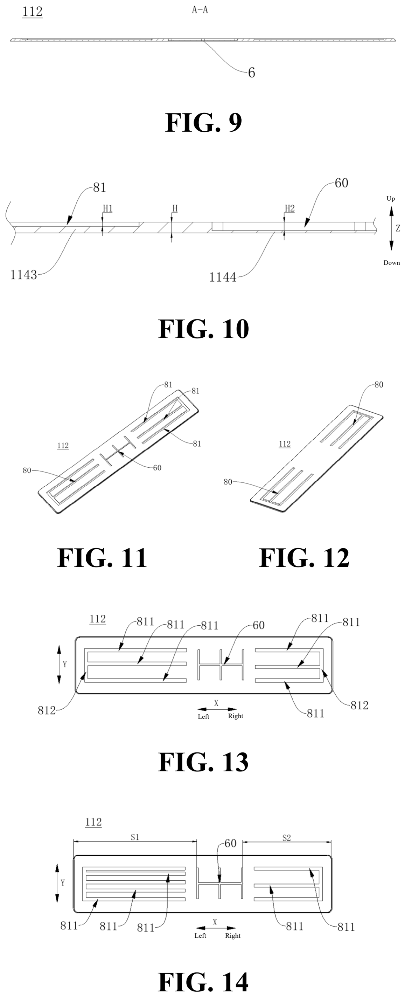

Please refer to FIGS. 8, 9, and 10. FIG. 8 is a schematic structural diagram of a mounting wall 114 according to some embodiments of the present application, FIG. 9 is a cross-sectional view taken along A-A in FIG. 8, and FIG. 10 is an enlarged view of a partial region in FIG. 9. The depth H1 of the gas guide groove 81 is less than the depth H2 of the pressure relief groove 60.

The thickness of the mounting wall 114 is H. The thickness of the mounting wall 114 extends along a Z-direction, and the depths of the gas guide groove 81 and the pressure relief groove 60 extend along the Z-direction. The mounting wall 114 includes a first wall portion 1143 and a second wall portion 1144. After providing the gas guide groove 81 on the mounting wall 114, the wall portion of the mounting wall 114 corresponding to the gas guide groove 81 in the Z-direction is the first wall portion 1143. After providing the pressure relief groove 60 on the mounting wall 114, the wall portion of the mounting wall 114 corresponding to the pressure relief groove 60 in the Z-direction is the second wall portion 1144, where the second wall portion 1144 is formed as the explosion-proof valve 6.

The thickness of the first wall portion 1143 is H-H1; and the thickness of the second wall portion 1144 is H-H2. The depth H1 of the gas guide groove 81 is set to be less than the depth H2 of the pressure relief groove 60, so as to control the thickness of the first wall portion 1143 to be greater than the thickness of the second wall portion 1144, thereby causing the structural strength of the first wall portion 1143 to be greater than the structural strength of the second wall portion 1144. In this way, when the gas pressure inside the battery cell 10 reaches the critical value, gas will preferentially rupture the second wall portion 1144, that is, preferentially destroy the explosion-proof valve 6.

Specifically, after determining the magnitude of the critical value of the battery cell 10, it is only necessary to control the thickness, material, etc., of the second wall portion 1144, such that when the gas pressure inside the battery cell 10 reaches the critical value, it can rupture the second wall portion 1144. The depth H1 of the gas guide groove 81 is set to be less than the depth H2 of the pressure relief groove 60, that is, the thickness of the first wall portion 1143 is made greater than the thickness of the second wall portion 1144, which can reduce the possibility of rupturing of the first wall portion 1143 by gas inside the battery cell 10.

Please continue to refer to FIG. 8 and further refer to FIG. 11. FIG. 11 is a schematic structural diagram of the mounting wall 114 according to some embodiments of the present application. The gas guide groove 81 and the pressure relief groove 60 are both disposed on a side of the mounting wall 114 facing an inner cavity of the case 11.

The gas guide groove 81 is configured to guide gas generated by the electrode assembly 2 toward the pressure relief groove 60. By arranging the gas guide groove 81 and the pressure relief groove 60 on the same side to enable the gas guide groove 81 to uniformly guide gas toward the pressure relief groove 60, gas can be uniformly distributed within the pressure relief groove 60. Consequently, the gas is uniformly gathered at the explosion-proof valve 6, such that when the gas pressure inside the battery cell 10 reaches a critical value, a relatively large opening 1110 can be formed when the gas ruptures the explosion-proof valve 6, thereby facilitating achieving rapid pressure relief for the battery cell 10.

Here, please continue to refer to FIGS. 9 and 10. The thickness direction of the mounting wall 114 extends along an up-down direction. In the up-down direction, the opening 1110 of the gas guide groove 81 and the opening 1110 of the pressure relief groove 60 face upward relative to the mounting wall 114. The first wall portion 1143 is defined between a bottom wall of the mounting groove and a lower bottom wall of the mounting wall 114, and the second wall portion 1144 is defined between a bottom wall of the pressure relief groove 60 and the lower bottom wall of the mounting wall 114.

Please continue to refer to FIGS. 5-7 and refer to FIG. 12. FIG. 12 is a schematic structural diagram of a mounting wall 114 according to some embodiments of the present application. The gas guide groove 81 is disposed on a side of the mounting wall 114 facing the inner cavity of the case 11, and the pressure relief groove 60 is disposed on a side of the mounting wall 114 facing away from the inner cavity of the case 11.

The side of the mounting wall 114 facing away from the inner cavity of the case 11 is an outer side of the case 11, such that a position of the pressure relief groove 60 on the case 11 is easily identified, thereby facilitating confirming a position of the explosion-proof valve 6. Consequently, during installation of the battery cell 10, it is convenient to determine a relative position of the battery cell 10 using the position of the explosion-proof valve 6.

Here, the thickness direction of the mounting wall 114 extends along an up-down direction. In the up-down direction, the opening 1110 of the gas guide groove 81 faces upward relative to the mounting wall 114, and the opening 1110 of the pressure relief groove 60 faces downward relative to the mounting wall 114. The first wall portion 1143 is defined between a bottom wall of the mounting groove and a lower bottom wall of the mounting wall 114, and the second wall portion 1144 is defined between a bottom wall of the pressure relief groove 60 and an upper wall of the mounting wall 114.

Please continue to refer to FIG. 8. In some embodiments of the present application, the gas guide groove 81 and the pressure relief groove 60 are spaced apart.

The wall thickness of the spacing portion between the gas guide groove 81 and the pressure relief groove 60 on the mounting wall 114 is not machined to be thinned, thereby ensuring the structural strength of the wall surface at the spacing between the gas guide groove 81 and the pressure relief groove 60 on the mounting wall 114. This facilitates reducing the possibility of deformation of the mounting wall 114, enabling the gas guide groove 81 on the mounting wall 114 to smoothly guide gas toward the pressure relief groove 60.

In some other embodiments of the present application, the gas guide groove 81 and the pressure relief groove 60 are in communication.

Gas may flow along the gas guide groove 81 toward the pressure relief groove 60 and flow into the pressure relief groove 60, which facilitates improving the gas guiding efficiency and achieves rapid pressure relief for the battery cell 10.

Please continue to refer to FIGS. 7 and 8. The pressure relief groove 60 includes a first pressure relief groove segment 61 and a second pressure relief groove segment 62 arranged in an intersecting configuration.

Arrangement in an intersecting configuration means that the first pressure relief groove segment 61 and the second pressure relief groove segment 62 have an intersection point, where the first pressure relief groove segment 61 and the second pressure relief groove segment 62 may extend linearly, and the angle between the first pressure relief groove segment 61 and the second pressure relief groove segment 62 may be a right angle or an acute angle. Alternatively, the first pressure relief groove segment 61 and the second pressure relief groove segment 62 may extend curvilinearly.

Arranging the first pressure relief groove segment 61 and the second pressure relief groove segment 62 in an intersecting configuration facilitates achieving communication between the first pressure relief groove segment 61 and the second pressure relief groove segment 62 and increases the area of the explosion-proof valve 6. This enables gas to be uniformly distributed within the first pressure relief groove segment 61 and the second pressure relief groove segment 62, such that when the gas pressure inside the battery cell 10 reaches a critical value, the forming of a relatively large opening 1110 is facilitated when the gas ruptures the explosion-proof valve 6, thereby facilitating achieving rapid pressure relief for the battery cell 10.

Please continue to refer to FIGS. 7 and 8. The first pressure relief groove segment 61 extends along the length direction of the mounting wall 114, and the second pressure relief groove segment 62 extends along the width direction of the mounting wall 114.

An angle formed between the first pressure relief groove segment 61 and the second pressure relief groove segment 62 is 90°, which facilitates reducing the resistance encountered by gas when flowing between the first pressure relief groove segment 61 and the second pressure relief groove segment 62, thereby enabling gas to be rapidly and uniformly distributed within the first pressure relief groove segment 61 and the second pressure relief groove segment 62.

Please continue to refer to FIG. 8. The pressure relief groove 60 includes one first pressure relief groove segment 61 and three second pressure relief groove segments 62. The first pressure relief groove segment 61 extends in a left-right direction, the second pressure relief groove segments 62 extend in a front-rear direction, and the three second pressure relief groove segments 62 are spaced apart along the left-right direction. The first pressure relief groove segment 61 is in communication with the middle portions of the three second pressure relief groove segments 62. In this way, gas in the first pressure relief groove segment 61 can flow to the second pressure relief groove segments 62, and gas in the second pressure relief groove segments 62 can flow to the first pressure relief groove segment 61, thereby balancing the gas pressure between the first pressure relief groove segment 61 and the second pressure relief groove segments 62. This facilitates reducing the probability of a higher gas pressure at a specific region of the pressure relief groove 60, enabling uniform distribution of gas within the first pressure relief groove segment 61 and the second pressure relief groove segments 62. When the gas pressure inside the battery cell 10 reaches the critical value, gas can uniformly rupture the explosion-proof valve 6, which facilitates forming a relatively large opening 1110, thereby facilitating rapid pressure relief for the battery cell 10.

Please continue to refer to FIGS. 8 and 11. The gas guide groove 81 and the explosion-proof valve 6 are arranged along the length direction of the mounting wall 114. The gas guide groove 81 includes a first gas guide groove segment 811, the first gas guide groove segment 811 extending along the length direction of the mounting wall 114.

The X-direction is the length direction of the mounting wall 114, and the Y-direction is the width direction of the mounting wall 114. The gas guide groove 81 and the explosion-proof valve 6 are arranged in the X-direction. The gas guide groove 81 can guide gas generated by the electrode assembly 2 along the X-direction toward the explosion-proof valve 6. Gas can flow along the first gas guide groove segment 811 from one end of the mounting wall 114 in the length direction toward the explosion-proof valve 6, thereby guiding gas from the end portion in the battery cell 10 further from the explosion-proof valve 6 toward the explosion-proof valve 6, enabling gas to gather at the explosion-proof valve 6.

Please continue to refer to FIGS. 8 and 11. There are a plurality of the first gas guide groove segments 811, and the plurality of first gas guide groove segments 811 are spaced apart along a width direction of the mounting wall 114.

The width direction of the mounting wall 114 extends along the Y-direction, the length direction of the mounting wall 114 extends along the X-direction, the first gas guide groove segments extend along the X-direction, and the plurality of first gas guide groove segments are spaced apart along the Y-direction. This facilitates increasing a gas guiding range of the gas guide groove 81, thereby facilitating increasing the gas guiding efficiency of the gas guide groove 81, enabling the gas guide groove 81 to rapidly guide gas toward the pressure relief groove 60, and further facilitating improving the pressure relief speed of the battery cell.

Please continue to refer to FIG. 8 and further refer to FIG. 13. FIG. 13 is a schematic structural diagram of a mounting wall 114 according to some embodiments of the present application. In each gas guide groove 81, the distance between any two adjacent first gas guide groove segments 811 is equal.

The plurality of first gas guide groove segments 811 extend along the Y-direction, and the distances between every two adjacent first gas guide groove segments 811 along the Y-direction are equal, enabling the plurality of first gas guide groove segments 811 to uniformly guide gas generated by the electrode assembly 2, thereby uniformly guiding the gas toward the explosion-proof valve 6.

Please refer to FIG. 14. FIG. 14 is a schematic structural diagram of the mounting wall 114 according to some embodiments of the present application. In each gas guide groove 81, a distance between at least two adjacent ones of the first gas guide groove segments 811 is not equal to a distance between another two adjacent ones of the first gas guide groove segments 811.

The plurality of first gas guide groove segments 811 extend along the Y-direction, and the distance between at least two adjacent first gas guide groove segments 811 in the Y-direction is not equal to the distance between another two adjacent first gas guide groove segments 811 in the Y-direction.

Here, the distance between at least two adjacent first gas guide groove segments 811 is set to be not equal to the distance between another two adjacent first gas guide groove segments 811, meaning that a plurality of first gas guide groove segments 811 at a portion of regions of the mounting wall 114 are arranged densely along the Y-direction, while a plurality of first gas guide groove segments 811 at another portion of regions are arranged sparsely along the Y-direction, so as to achieve targeted flow guiding for gas at different positions.

In some cases, the volume of gas generated at a portion of regions within the battery cell 10 duced. may be large; therefore, dense arrangement of a plurality of first gas guide segments at corresponding regions on the mounting wall 114 along the Y direction can increase the efficiency of flow guiding for gas at these regions by the first gas guide groove segments 811, so as to smoothly guide the gas to the explosion-proof valve 6.

Please continue to refer to FIGS. 8, 13, and 14. The gas guide groove 81 further includes a second gas guide groove segment 812, the second gas guide groove segment 812 extending along a width direction of the mounting wall 114, where one end of the first gas guide groove segment 811 away from the explosion-proof valve 6 is in communication with the second gas guide groove segment 812 and the other end extends toward the explosion-proof valve 6.

The second gas guide groove segment 812 extends along the Y-direction, and the first gas guide groove segment 811 extends along the X-direction, where the end portion of the first gas guide groove segment 811 away from the explosion-proof valve 6 is in communication with the second gas guide groove segment 812. Providing the second gas guide groove segment 812 facilitates increasing the volume of the gas guide groove 81, enabling the gas guide groove 81 to accommodate more gas, thereby facilitating improving the flow guiding efficiency of the gas guide groove 81, where gas in the second gas guide groove 81 can enter the first gas guide groove 81 and flow toward the explosion-proof valve 6 along the first gas guide groove 81.

Please continue to refer to FIGS. 8, 13, and 14. Two gas guide portions 80 are provided, the two gas guide portions 80 being spaced apart in a length direction of the mounting wall 114, and the explosion-proof valve 6 being located between the two gas guide portions 80.

The two gas guide grooves 81 are spaced apart in the X-direction. In the X-direction, the explosion-proof valve 6 is located between the two gas guide portions 80. The gas guide grooves 81 of the two gas guide portions 80 can guide gas at both ends of the explosion-proof valve 6 in the X-direction, causing gas located at the two ends of the explosion-proof valve 6 in the X-direction to flow along the corresponding gas guide groove 81 toward the explosion-proof valve 6, thereby further improving the gas guiding efficiency and increasing the pressure relief speed of the battery cell 10.

Please continue to refer to FIG. 8. The explosion-proof valve 6 is disposed at a central position of the mounting wall 114 in the length direction, and the two gas guide portions 80 have the same structure and are arranged symmetrically about a center of the explosion-proof valve 6.

The centerline of the explosion-proof valve 6 extends along the Y-direction, and the two gas guide portions 80 have the same structure and are arranged centrally symmetrically about the center of the explosion-proof valve 6. This enables the two gas guide portions 80 to uniformly guide gas located on the two sides of the explosion-proof valve 6 in the X-direction, enabling gas to flow uniformly toward the explosion-proof valve 6, which reduces the possibility of blockage of gas flows within gas guide channels, thereby facilitating improving the gas guiding efficiency and improving the pressure relief efficiency of the battery cell 10.

Please continue to refer to FIGS. 13 and 14. The mounting wall 114 has a first end and a second end opposite to each other in its length direction, the distance between the explosion-proof valve 6 and the first end being greater than the distance between the explosion-proof valve 6 and the second end, where the area of the gas guide portion 80 located between the explosion-proof valve 6 and the first end is greater than the area of the gas guide portion 80 located between the explosion-proof valve 6 and the second end.

The first end and the second end of the mounting wall 114 are the two ends of the mounting wall 114 in the length direction, where the length direction of the mounting wall 114 extends along the left-right direction. The distance between the left end of the explosion-proof valve 6 and the left end of the mounting wall 114 is S1, and the distance between the right end of the explosion-proof valve 6 and the right end of the mounting wall 114 is S2, S1 being not equal to S2.

In some cases, the volume of gas generated at a portion of regions within the battery cell 10 may be large. If the volume of gas on the left side of the battery cell 10 is greater than that on the right side of the battery cell 10, the distance between the explosion-proof valve 6 and the first end is greater than the distance between the explosion-proof valve 6 and the second end, that is, S1 > S2. The area of the gas guide portion 80 located on the left side of the mounting wall 114 is greater than the area of the gas guide portion 80 located on the right side of the mounting wall 114, so as to increase the area of the gas guide portion 80 on the left side of the mounting wall 114. This facilitates improving the flow guiding efficiency for gas on the left side of the battery cell 10, thereby adapting to the situation where the volume of gas on the left side of the battery cell 10 is large.

Certainly, if the volume of gas on the right side of the battery cell 10 is larger than the volume of gas on the left side of the battery cell 10, then S2 > S1. The area of the gas guide portion 80 located on the right side of the mounting wall 114 is greater than the area of the gas guide portion 80 located on the left side of the mounting wall 114, thereby increasing the area of the gas guide portion 80 on the right side of the mounting wall 114. This facilitates improving the flow guiding efficiency for gas on the right side of the battery cell 10, thereby adapting to the situation where the volume of gas on the right side of the battery cell 10 is large.

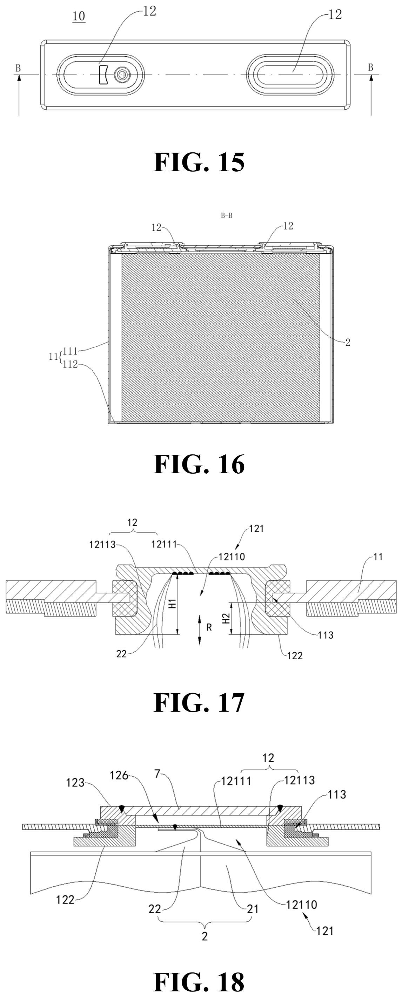

Please refer to FIG. 5 and continue to refer to FIGS. 15 and 16. FIG. 15 is a schematic structural diagram of a battery cell 10 according to some embodiments of the present application, and FIG. 16 is a cross-sectional view taken along B-B in FIG. 15. The case 11 includes a case cover 112 and a case body 111 having an opening 1110, the case cover 112 being disposed to cover the opening 1110, and the mounting wall 114 being located on the case cover 112 or on the case body 111.

Here, the case cover 112 is disposed to cover the opening 1110 to form the internal environment of the battery cell 10. When the gas inside the battery cell 10 reaches a critical value, the gas can rupture the explosion-proof valve 6 on the mounting wall 114, thereby achieving pressure relief for the battery cell 10.

The mounting wall 14 may be disposed on the case cover 112, and the mounting wall 114 may also be a side wall of the case body 111 that is adjacent to the case cover 112, which is not overly limited here.

Please refer to FIG. 5. The mounting wall 114 is located on the case cover 112, a terminal post 12 is disposed on a wall surface of the case body 111 that is opposite to the opening 1110, and the terminal post 12 and the mounting wall 114 are located at two ends of the battery cell 10, so as to space the terminal post 12 and the explosion-proof valve 6 apart. In this way, when gas gathers at the explosion-proof valve 6, the influence of gas on the terminal post 12 can be reduced.

Furthermore, the case cover 112 has a relatively small volume compared to the case 11, and it is thus simpler to perform machining on the case cover 112 to form the gas guide groove 81 and the pressure relief groove 60, thereby facilitating reducing the machining difficulty.

Please refer to FIG. 5 and continue to refer to FIGS. 17 and 18. FIG. 17 is a partial cross-sectional schematic view of a battery cell 10 provided in some embodiments of the present application. The figure is a partial cross-sectional schematic view of a battery cell 10 provided in some embodiments of the present application. The case 11 includes a case cover 112 and a case body 111 having an opening 1110, the case cover 112 being disposed to cover the opening 1110, and the mounting wall 114 being located on the case cover 112, where a wall body of the case body 111 opposite to the mounting wall 114 is provided with a terminal post 12, the terminal post 12 being provided with an accommodation portion 121, and at least a portion of a conductive portion 22 extending into and being accommodated within the accommodation portion 121 and the conductive portion 22 being electrically connected to the terminal post 12. In other words, the terminal post 12 is configured as a hollow structure.

Here, " at least a portion" means that the conductive portion 22 may be entirely accommodated within the accommodation portion 121, or the conductive portion 22 may be partially accommodated within the accommodation portion 121. Since the terminal post 12 is provided with the accommodation portion 121, the hollow structure of the accommodation portion 121 can, on the one hand, reduce the weight of the terminal post 12 to some extent, thereby improving the weight energy density of the battery cell 10 and the battery 100. On the other hand, the conductive portion 22 can be accommodated within the accommodation portion 121, which improves the assembly efficiency of the conductive portion 22 and can save the space occupied by the conductive portion 22, leading to full utilization of the space of the battery cell 10, thereby making the structure of the battery cell 10 more compact and further facilitating improving the energy density of the battery cell 10.

More specifically, accommodating a portion or the entirety of the conductive portion 22 within the accommodation portion 121 allows the portion of the conductive portion 22 located within the accommodation portion 121 to occupy space inside the terminal post 12. This can reduce the space occupied by the conductive portion 22 within the case 11. In a case where the size of the case 11 is fixed, some space can be saved within the case 11 to accommodate a larger-sized active material-coated portion 21, thereby enhancing the volumetric energy density of the battery cell 10. For example, when the conductive portion 22 is led out from a side of the active material-coated portion 21 close to the terminal post 12, the space occupied by the conductive portion 22 between the active material-coated portion 21 and the terminal post 12 can be saved. This allows increasing the dimension of the active material-coated portion 21 in the lead-out direction of the conductive portion 22, thereby reducing the spacing between the active material-coated portion 21 and the terminal post 12, and improving the energy density of the battery cell 10.

Meanwhile, by accommodating at least a portion of the conductive portion 22 within the accommodation portion 121, space occupied by the battery cell 10 itself can be reduced, which enables a battery 100 having the same volume to accommodate a larger number of battery cells 10, and also increases the volumetric energy density of the battery 100; additionally, accommodating at least a portion of the conductive portion 22 within the accommodation portion 121 to occupy space within the terminal post 12 can reduce the redundancy of the conductive portion 22 within the case 11 to at least some extent, reduce the probability of short circuits between the conductive portion 22 and the active material-coated portion 21, and reduce the probability of short circuits of the battery cell 10, thereby improving the operational reliability and stability of the battery cell 10 and the battery 100.

It should be noted that in the embodiments of the present application, the position of the accommodation portion 121 may be located on a side of the terminal post 12 facing the active material-coated portion 21, or on a side of the terminal post 12 facing away from the active material-coated portion 21.

As an example, please refer again to FIGS. 17 and 18. When the accommodation portion 121 is located on the side of the terminal post 12 facing the active material-coated portion 21, the accommodation portion 121 includes a first accommodation groove 12110, and a surface of a side of the terminal post 12 facing the active material-coated portion 21 is a terminal post inner end surface 122, where a groove opening of the first accommodation groove 12110 is formed on the terminal post inner end surface 122, and at least a portion of the conductive portion 22 is accommodated within the first accommodation groove 12110.

As an example, the first accommodation groove 12110 is a groove body, the groove body being a grooved structure having a certain depth. For example, when the terminal post 12 is disposed on an upper end wall of the case 11, and the terminal post inner end surface 122 is the lower surface of the terminal post 12, the first accommodation groove 12110 is formed as an accommodation groove of which the groove opening opens downward and the groove wall is recessed upward. As another example, when the terminal post 12 is disposed on a lower end wall of the case 11, and the terminal post inner end surface 122 is the upper surface of the terminal post 12, the first accommodation groove 12110 is formed as an accommodation groove of which the groove opening opens upward and the groove wall is recessed downward.

In the aforementioned technical solution, on the one hand, providing the first accommodation groove 12110 on the terminal post 12 can reduce the weight of the terminal post 12 to some extent, thereby increasing the gravimetric energy density of the battery cell 10 and the battery 100. On the other hand, since the groove opening of the first accommodation groove 12110 is formed on the terminal post inner end surface 122, and the terminal post inner end surface 122 is a surface of a side of the terminal post 12 close to the active material-coated portion 21, the first accommodation groove 12110 can open toward a direction of the active material-coated portion 21, thereby facilitating extension of the conductive portion 22 into the first accommodation groove 12110 and improving the assembly efficiency. Moreover, the first accommodation groove 12110 in this form facilitates machining and improves the production efficiency.

Furthermore, the first accommodation groove 12110 can be easily machined to have a larger volume, and thus can accommodate more conductive portions 22. Simultaneously, since the first accommodation groove 12110 opens toward the direction of the active material-coated portion 21, the first accommodation groove 12110 can also serve as a buffer and temporary storage structure for electrolyte solution, enabling the case 11 to accommodate more electrolyte solution. Since electrolyte solution is consumed during charging and discharging of the battery cell 10, when there exists more electrolyte solution, the service life of the battery cell 10 can be extended. Additionally, because the first accommodation groove 12110 opens toward the direction of the active material-coated portion 21, the first accommodation groove 12110 can serve as an accommodation and buffer structure for gas generated inside the electrode assembly 2, thereby reducing the expansion of the battery cell 10 and improving the reliability and stability of the battery cell 10.

Additionally, since the first accommodation groove 12110 is located on the inner side of the terminal post 12, external foreign matter and impurities are not easily able to enter the first accommodation groove 12110. This can reduce the influence of external foreign matter and impurities on the electrode assembly 2, and can enhance the operational stability and reliability of the electrode assembly 2, thereby improving the stability and reliability of the battery cell 10 and the battery 100.

Please refer again to FIG. 17. In the embodiments of the present application, the method of connection between the terminal post 12 and the case 11 is not limited; for example, it may be welding or riveting. For example, when the two cooperate by riveting, the case 11 has a through hole 113, and the terminal post 12 is rivet-installed at the through hole 113. Certainly, it can be understood that when the two cooperate by welding or other means, the case 11 may also be provided with the through hole 113 to facilitate installation of the terminal post 12 through the through hole 113 onto the case 11, which is not limited here.

Meanwhile, the first accommodation groove 12110 may be disposed corresponding to the position of the through hole 113. That is to say, on a projection plane perpendicular to the axial direction R of the terminal post 12, the orthographic projection of the first accommodation groove 12110 is located within the range of the orthographic projection of the through hole 113. This enables the first accommodation groove 12110 to have a relatively large depth to accommodate more conductive portions 22, thereby more significantly reducing the space occupied by the conductive portion 22 within the case 11. Specifically, when the case 11 is provided with the through hole 113 and the terminal post 12 is installed in the through hole 113, along the axial direction R of the terminal post 12, the depth H1 of the first accommodation groove 12110 is greater than or equal to the minimum distance H2 from the terminal post inner end surface 122 to the through hole 113.

It should be noted that the specific shape of the first accommodation groove 12110 is not limited, and it may be a regular shape or an irregular shape. For example, it may be a constant cross-section columnar groove with a rectangular, elliptical, or racetrack-shaped cross-section; or a trapezoidal groove with a rectangular cross-section and gradually varying cross-sectional dimensions; or a hemispherical groove with a circular cross-section and gradually varying cross-sectional dimensions; or a semi-ellipsoidal groove with an elliptical cross-section and gradually varying cross-sectional dimensions, etc. Therefore, the depth H1 of the first accommodation groove 12110 refers to the maximum depth of the first accommodation groove 12110 along the axial direction R of the terminal post 12.

Since along the axial direction R of the terminal post 12, the depth H1 of the first accommodation groove 12110 is greater than or equal to the minimum distance H2 from the terminal post inner end surface 122 to the through hole 113, the volume of the terminal post 12 can be fully utilized, enabling the first accommodation groove 12110 to have a relatively large depth. This is beneficial for accommodating more conductive portions 22, thereby more significantly reducing the space occupied by the conductive portion 22 within the case 11, further enhancing the energy density of the battery cell 10, and further reducing redundancy of the conductive portion 22 within the case 11. Meanwhile, since the first accommodation groove 12110 has a relatively large depth, it can also accommodate gas generated by the electrode assembly 2, thereby improving the reliability and stability of the battery cell 10, and it can also accommodate more electrolyte solution, thereby extending the service life of the battery cell 10.

Please refer again to FIGS. 17 and 18. To improve the stability and reliability of the electrical connection between the active material-coated portion 21 and the terminal post 12, in some embodiments of the present application, the electrical connection position between the conductive portion 22 and the terminal post 12 may be located on the groove wall of the first accommodation groove 12110 formed by the accommodation portion 121.

As an example, electrical connection may be formed between the conductive portion 22 and the terminal post 12 through welding, and the electrical connection position is the welding position between the conductive portion 22 and the terminal post 12. Meanwhile, the welding manner between the conductive portion 22 and the terminal post 12 is not limited. For example, it may be laser welding, and depending on factors such as the position, angle, or structure of the welding site, vertical welding or inclined welding may be selected, as well as lap welding or edge sealing welding, etc. In other embodiments of the present application, the electrical connection between the conductive portion 22 and the terminal post 12 may also be achieved by other means instead of welding, for example, providing conductive adhesive or conductive rivets, or other means. To simplify the description, the following introduction is provided taking as an example the electrical connection being formed between the conductive portion 22 and the terminal post 12 through welding, where the welding position is the electrical connection position between the conductive portion 22 and the terminal post 12.

Specifically, the terminal post 12 includes a first end wall 12111 and a first side wall 12113, where the first end wall 12111 is located on a side of the first side wall 12113 away from the active material-coated portion 21, the first end wall 12111 and the first side wall 12113 enclose to form the first accommodation groove 12110, and the electrical connection position between the conductive portion 22 and the terminal post 12 is located on the first end wall 12111 and/or the first side wall 12113. That is to say, the conductive portion 22 may be welded to at least one of the first end wall 12111 or the first side wall 12113.

In the aforementioned technical solution, by setting the electrical connection position between the conductive portion 22 and the terminal post 12 on at least one of the first end wall 12111 or the first side wall 12113, not only the first accommodation groove 12110 functions to accommodate at least a portion of the conductive portion 22, but also the groove wall of the first accommodation groove 12110 functions to achieve electrical connection with the conductive portion 22. This can simplify the structure of the terminal post 12, facilitate machining of the terminal post 12, and simplify the structure of the conductive portion 22, thereby reducing the redundancy of the conductive portion 22, and lowering the cost of the conductive portion 22. Moreover, utilizing the groove wall of the first accommodation groove 12110 to achieve electrical connection with the conductive portion 22 allows the region for electrical connection between the conductive portion 22 and the terminal post 12 to be set relatively large. This can not only reduce the difficulty of electrical connection but also improve the reliability and stability of the electrical connection, thereby enhancing the performance of the battery cell 10.

Additionally, since the electrical connection position between the conductive portion 22 and the terminal post 12 is located within the first accommodation groove 12110, it can not only avoid protrusion of the electrical connection position outside the terminal post 12 and occupation of space beyond the terminal post 12, but also allow the position of the electrical connection to be protected by the terminal post 12, thereby improving the reliability and stability of the electrical connection between the conductive portion 22 and the terminal post 12.

Furthermore, in the embodiments of the present application, the first end wall 12111 is configured as a closed structure without a penetration hole 12130, such that the first accommodation groove 12110 is isolated from the external space of the case 11. This can reduce the problem of leakage of electrolyte solution inside the case 11 from the first accommodation groove 12110.

Please refer again to FIGS. 17 and 18. In some optional embodiments, a local shape of the conductive portion 22 matches a local shape of the first end wall 12111, and the two are attached and are electrically connected, such that the position of the electrical connection between the conductive portion 22 and the first end wall 12111 extends along the length or width direction of the first end wall 12111. For example, when the first end wall 12111 is planar, part of the conductive portion 22 may also be planar and attached to the first end wall 12111, with electrical connection performed at the attached position, for example, through welding. Thus, the area of the electrical connection can be increased, thereby enhancing the reliability and stability of the electrical connection.

Additionally, when the electrical connection between the conductive portion 22 and the first end wall 12111 is by welding, since the first end wall 12111 is located on a side of the first accommodation groove 12110 away from the active material-coated portion 21, welding operations are facilitated. For example, welding can be performed from a side of the terminal post 12 away from the active material-coated portion 21.

It is worth noting that the shape of the first end wall 12111 is not limited; for example, it may be flat-plate-shaped, arc-plate-shaped, etc. Here, when the first end wall 12111 is a flat-plate-shaped structure, the first end wall 12111 is arranged at an angle to the axial direction R of the terminal post 12. For example, it may be a flat-plate structure perpendicular to the axial direction R of the terminal post 12. As another example, it may also be an inclined plate-shaped structure not perpendicular to the axial direction R of the terminal post 12, with the inclination direction not limited.

Certainly, in other embodiments of the present application, it is also possible that the position of the electrical connection between the conductive portion 22 and the first end wall 12111 does not extend along the length or width direction of the first end wall 12111. For example, it may also be a plurality of discretely arranged points. For instance, the conductive portion 22 has a plurality of spaced-apart portions separately welded to the first end wall 12111, which will not be elaborated here.

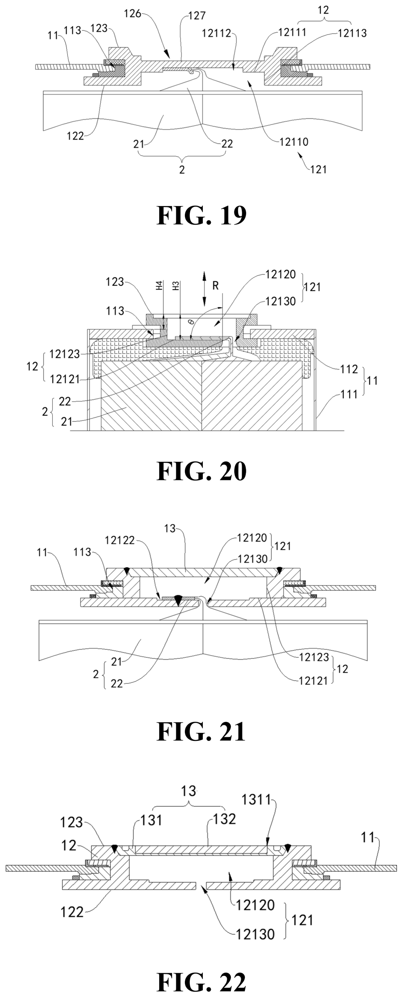

Please refer to FIG. 19. FIG. 19 is a partial cross-sectional schematic view of a battery cell 10 provided in some embodiments of the present application. When the conductive portion 22 is electrically connected to the first end wall 12111, a first sunk groove 12112 may be provided on the first end wall 12111, where the sinking direction of the first sunk groove 12112 is a direction away from the active material-coated portion 21. At least a portion of the electrical connection position between the conductive portion 22 and the first end wall 12111 is located within the first sunk groove 12112. As an example, at least a portion of the conductive portion 22 may be disposed within the first sunk groove 12112 and connected to a portion of the first end wall 12111 that is configured to define the first sunk groove 12112.

In the aforementioned technical solution, on the one hand, the first sunk groove 12112 may be used to pre-position and limit the electrical connection position of the conductive portion 22, which not only facilitates accurately locating the position to achieve electrical connection and improves production efficiency but also enhances the stability and reliability of the conductive portion 22, improving the stability and reliability of the battery cell 10 during charging and discharging. On the other hand, by providing the first sunk groove 12112 in the first end wall 12111, the wall thickness of part of the first end wall 12111 can be partially reduced, which not only facilitates welding but also helps reduce the weight of the terminal post 12, thereby improving the weight energy density of the battery cell 10.

Please refer again to FIGS. 18 and 19. In the embodiments of the present application, the terminal post 12 may also be provided with a first groove 126 as required, where the first groove 126 is located on a side of the terminal post 12 away from the active material-coated portion 21. That is, the surface of a side of the terminal post 12 away from the active material-coated portion 21 is the terminal post outer end surface 123, and a groove opening of the first groove 126 is formed on the terminal post outer end surface 123.

It can be understood that the first groove 126 is a groove body, the groove body being a grooved structure having a certain depth. Moreover, when the terminal post 12 is disposed on an upper end wall of the case 11, and the terminal post outer end surface 123 is the upper surface of the terminal post 12, the first groove 126 is formed as a first groove 126 of which the groove opening opens upward and the groove wall is recessed downward (i.e., recessed toward the direction of the electrode assembly 2). As another example, when the terminal post 12 is disposed on a lower end wall of the case 11, and the terminal post outer end surface 123 is the lower surface of the terminal post 12, the first groove 126 is formed as a first groove 126 of which the groove opening opens downward and the groove wall is recessed upward (i.e., recessed away from the direction of the electrode assembly 2).

In the aforementioned technical solution, on the one hand, since the terminal post 12 is provided with the first groove 126, the weight of the terminal post 12 can be further reduced, thereby improving the weight energy density of the battery cell 10 and the battery 100. On the other hand, the first groove 126 is located on the outer side of the terminal post 12, i.e., opening toward a side of the terminal post 12 facing away from the interior of the case 11. The first groove 126 can be used to accommodate or install structural components connecting various battery cells 10 in the battery 100, so as to fully utilize the space within the terminal post 12 and improve the space utilization rate and volumetric energy density of the battery 100.

Additionally, since the terminal post 12 is simultaneously provided with the first accommodation groove 12110 and the first groove 126, with the first groove 126 located on a side of the first accommodation groove 12110 away from the active material-coated portion 21 and the first groove 126 opening in a direction away from the first accommodation groove 12110, laser welding between the conductive portion 22 and the first end wall 12111 can be conveniently performed through the first groove 126 from the outer side of the terminal post 12, i.e., the side of the terminal post 12 away from the active material-coated portion 21, that is, facilitating achieving electrical connection between the conductive portion 22 and the terminal post 12 through external welding. In other words, through the above structural arrangement, external welding of the terminal post 12 and the conductive portion 22 can be conveniently performed through the first groove 126, facilitating the processing and manufacturing of the battery cell 10 and saving the costs of machining and manufacturing.

Further, to conveniently and effectively weld the conductive portion 22 to the groove wall of the first accommodation groove 12110 through the first groove 126 to improve the reliability of the welding between the conductive portion 22 and the groove wall of the first accommodation groove 12110, in the embodiments of the present application, the portion between the first groove 126 and the first accommodation groove 12110 may be laser-welded to the conductive portion 22. That is, the spacing portion 127 shown in FIG. 19 is laser-welded to the conductive portion 22 to achieve electrical connection between the electrode assembly 2 and the terminal post 12. The spacing portion 127 of the terminal post 12 that is located between the first groove 126 and the first accommodation groove 12110 has a relatively small thickness. The spacing portion 127 isolates the first groove 126 and the first accommodation groove 12110. The wall surface of a side of the spacing portion 127 close to the active material-coated portion 21 can serve as the first end wall 12111. When the conductive portion 22 needs to be welded to the first end wall 12111, since the thickness of the spacing portion 127 is relatively small, welding between the conductive portion 22 and the first end wall 12111 can be facilitated through the first groove 126, thereby improving the convenience and the reliability of welding.

Please refer again to FIG. 18. Further, the battery cell 10 may also include a groove cover 7, the groove cover 7 being disposed on the terminal post 12 and sealing the groove opening of the first groove 126. In the aforementioned technical solution, by providing the groove cover 7 that seals the first groove 126, the terminal post 12 can achieve indirect electrical connection with a busbar component via the groove cover 7. The position and structure of the groove cover 7 can be configured to make the electrical connection between the groove cover 7 and the busbar component more convenient and have a larger electrical connection area. Thus, by providing the groove cover 7, electrical connection between adjacent battery cells 10 within the battery 100 is facilitated. Moreover, since the position of electrical connection between a battery cell 10 and another battery cell 10 is located at the groove cover 7, the positions of electrical connection with the conductive portion 22 and the terminal post 12 can be separated by the first groove 126, and interference between the two is reduced, thereby further improving the stability and reliability of the battery cells 10.

As an example, please refer to FIG. 20. FIG. 20 is a partial cross-sectional schematic view of a battery cell 10 provided in some embodiments of the present application. The accommodation portion 121 may also be configured to include a second accommodation groove 12120, and a surface of a side of the terminal post 12 away from the active material-coated portion 21 is a terminal post outer end surface 123, where a groove opening of the second accommodation groove 12120 is formed on the terminal post outer end surface 123, the second accommodation groove 12120 is in communication with an interior of the case 11 through a penetration hole 12130, and the conductive portion 22 passes through the penetration hole 12130 and at least a portion thereof is accommodated within the second accommodation groove 12120.

It can be understood that the second accommodation groove 12120 is a groove body, the groove body being a grooved structure having a certain depth. For example, when the terminal post 12 is disposed on an upper end wall of the case 11, and the terminal post outer end surface 123 is the upper surface of the terminal post 12, the second accommodation groove 12120 is formed as an accommodation groove of which the groove opening opens upward and the groove wall is recessed downward. As another example, when the terminal post 12 is disposed on a lower end wall of the case 11, and the terminal post outer end surface 123 is the lower surface of the terminal post 12, the second accommodation groove 12120 is formed as an accommodation groove of which the groove opening opens downward and the groove wall is recessed upward.

In the aforementioned technical solution, please refer again to FIG. 20. On the one hand, providing the second accommodation groove 12120 on the terminal post 12 can reduce the weight of the terminal post 12 to some extent, thereby increasing the gravimetric energy density of the battery cell 10 and the battery 100. On the other hand, since the groove opening of the second accommodation groove 12120 is formed on the terminal post outer end surface 123, and the terminal post outer end surface 123 is a surface of a side of the terminal post 12 away from the active material-coated portion 21, the second accommodation groove 12120 can open toward a direction facing away from the active material-coated portion 21. Thus, when accommodating at least a portion of the conductive portion 22 within the second accommodation groove 12120, it is easy to achieve storage arrangement of the conductive portion 22 through the groove opening of the second accommodation groove 12120, and it is easy to perform an electrical connection operation between the conductive portion 22 and the terminal post 12 through the groove opening of the second accommodation groove 12120, thereby reducing the production difficulty of the battery cell 10 and improving the production efficiency of the battery cell 10.

Meanwhile, since the second accommodation groove 12120 can communicates with the interior of the case 11 through the penetration hole 12130, the second accommodation groove 12120 can also serve as a buffer and temporary storage structure for electrolyte solution, enabling the case 11 to accommodate more electrolyte solution. Since electrolyte solution is consumed during charging and discharging of the battery cell 10, when there exists more electrolyte solution, the service life of the battery cell 10 can be extended. Additionally, because the second accommodation groove 12120 can communicate with the interior of the case 11 through the penetration hole 12130, the second accommodation groove 12120 can serve as an accommodation and buffer structure for gas generated inside the electrode assembly 2, thereby reducing the expansion of the battery cell 10 and improving the reliability and stability of the battery cell 10.

It is worth noting that when the accommodation portion 121 has the second accommodation groove 12120 and the conductive portion 22 passes through the penetration hole 12130 and at least a portion thereof is accommodated within the second accommodation groove 12120, the electrical connection position between the conductive portion 22 and the terminal post 12 is not limited. As an example, when the conductive portion 22 passes through the penetration hole 12130 and at least a portion thereof is accommodated within the second accommodation groove 12120, in the embodiments of the present application, the electrical connection position between the conductive portion 22 and the terminal post 12 is located on the hole wall of the penetration hole 12130 formed in the terminal post 12.

In the aforementioned technical solution, by setting the electrical connection position between the conductive portion 22 and the terminal post 12 on the hole wall of the penetration hole 12130, electrical connection operations between the conductive portion 22 and the terminal post 12 can be conveniently performed through the second accommodation groove 12120. Moreover, when the electrical connection area between the conductive portion 22 and the terminal post 12 is large, the electrical connection between the conductive portion 22 and the terminal post 12 can be used to seal the penetration hole 12130, thereby saving sealing costs, reducing leakage of electrolyte solution, and eliminating the need for sealing components.

Specifically, welding between the conductive portion 22 and the hole wall of the penetration hole 12130 can be performed at a position of the penetration hole 12130 for connection with the second accommodation groove 12120. This facilitates operation, and by controlling the weld mark, the weld mark and conductive portion 22 can be used to seal the penetration hole 12130, thereby mitigating the problem of leakage of electrolyte solution within the case 11 from the penetration hole 12130.

As another example, when the conductive portion 22 passes through the penetration hole 12130 and at least a portion thereof is accommodated within the second accommodation groove 12120, in some other embodiments of the present application, the electrical connection position between the conductive portion 22 and the terminal post 12 may also be located on the groove wall of the second accommodation groove 12120 formed in the terminal post 12. Thus, electrical connection operations are facilitated. For instance, when welding the conductive portion 22 to the groove wall of the second accommodation groove 12120 formed in the terminal post 12, issues such as conductive particles generated during welding entering the case 11 and causing short circuits can be mitigated.

Please refer again to FIG. 20. The terminal post 12 includes a second end wall 12121 and a second side wall 12123, where the second end wall 12121 is located on a side of the second side wall 12123 close to the active material-coated portion 21, the second end wall 12121 and the second side wall 12123 enclose to form the second accommodation groove 12120, the penetration hole 12130 is formed in the second end wall 12121, and the electrical connection position between the conductive portion 22 and the terminal post 12 is located on the second end wall 12121 and/or on the second side wall 12123.

More specifically, electrical connection may be formed between the conductive portion 22 and the terminal post 12 through welding; therefore, the welding position is the electrical connection position between the conductive portion 22 and the terminal post 12. In other embodiments of the present application, the electrical connection between the conductive portion 22 and the terminal post 12 may also be achieved by other means instead of welding, for example, providing conductive adhesive or conductive rivets, or other means, which this will not be elaborated here.

To simplify the description, the following introduction is provided taking as an example the electrical connection being formed between the conductive portion 22 and the terminal post 12 through welding, where the welding position is the electrical connection position between the conductive portion 22 and the terminal post 12. For example, in some embodiments, the electrical connection position between the conductive portion 22 and the terminal post 12 is located on the second end wall 12121 and/or the second side wall 12123; that is, the conductive portion 22 may be welded to at least one of the second end wall 12121 or the second side wall 12123.

In the aforementioned technical solution, by setting the electrical connection position between the conductive portion 22 and the terminal post 12 on at least one of the second end wall 12121 or the second side wall 12123, not only the second accommodation groove 12120 functions to accommodate at least a portion of the conductive portion 22, but also the groove wall of the second accommodation groove 12120 functions to achieve electrical connection with the conductive portion 22. This can simplify the structure of the terminal post 12 and facilitate machining of the terminal post 12. Moreover, since the penetration hole 12130 is formed in the second end wall 12121, the conductive portion 22 can easily extend through the penetration hole 12130 into the second accommodation groove 12120. This can simplify the structure of the conductive portion 22, reduce the redundancy of the conductive portion 22, and lower the costs of the conductive portion 22. Additionally, the opening direction of the groove opening of the second accommodation groove 12120 facilitates electrical connection operations between the conductive portion 22 and the groove wall of the second accommodation groove 12120 through the groove opening of the second accommodation groove 12120. This can reduce the difficulty of electrical connection. Furthermore, utilizing the groove wall of the second accommodation groove 12120 to achieve electrical connection with the conductive portion 22 allows the region for electrical connection between the conductive portion 22 and the terminal post 12 to be relatively large. This can improve the reliability and stability of the electrical connection, thereby enhancing the performance of the battery cell 10.

Additionally, since the electrical connection position between the conductive portion 22 and the terminal post 12 is located within the second accommodation groove 12120, it can not only avoid protrusion of the electrical connection position outside the terminal post 12 and occupation of space beyond the terminal post 12, but also allow the position of the electrical connection to be protected by the terminal post 12, thereby improving the reliability and stability of the electrical connection between the conductive portion 22 and the terminal post 12.

Please refer again to FIG. 20. In some embodiments, a local shape of the conductive portion 22 matches a local shape of the first end wall 12121, and the two are attached and are electrically connected, such that the position of the electrical connection between the conductive portion 22 and the second end wall 12121 extends along the length or width direction of the second end wall 12121. For example, when the second end wall 12121 is planar, part of the conductive portion 22 may also be planar and attached to the second end wall 12121, with electrical connection performed at the attached position, for example, through welding. Thus, the area of the electrical connection can be increased, thereby enhancing the reliability and stability of the electrical connection.

It is worth noting that the shape of the second end wall 12121 is not limited; for example, it may be in a flat-plate-shaped or arc-plate-shaped structure. Here, when the second end wall 12121 is in a flat-plate-shaped structure, the second end wall 12121 is arranged at an angle to the axial direction R of the terminal post 12. For example, it may be a flat-plate-shaped structure perpendicular to the axial direction R of the terminal post 12. As another example, it may also be an inclined flat-plate structure not perpendicular to the axial direction R of the terminal post 12, with the inclination direction not limited.

For example, please refer again to FIG. 20. When the second end wall 12121 is in a flat-plate-shaped structure, the angle θ between the second end wall 12121 and the axial direction R of the terminal post 12 equals 90°. That is, along the direction from the penetration hole 12130 to the second side wall 12123, the second end wall 12121 is equidistant from the active material-coated portion 21. This facilitates the welding of the conductive portion 22 to the second end wall 12121.

As another example, the angle θ between the second end wall 12121 and the axial direction R of the terminal post 12 is greater than 90°. That is, along the direction from the penetration hole 12130 to the second side wall 12123, the second end wall 12121 extends inclinedly towards the direction close to the active material-coated portion 21. Thus, the extension distance of the conductive portion 22 along the second end wall 12121 can be increased to enhance the reliability of the electrical connection. As an example, the angle θ between the second end wall 12121 and the axial direction R of the terminal post 12 may be 90°-145°, for example, 100°, 110°, 120°, 130°, 140°, etc. On the one hand, this can make the second end wall 12121 easy to machine and facilitate electrical connection with the conductive portion 22. On the other hand, it can more fully utilize the space within the terminal post 12 to accommodate the conductive portion 22.

As yet another example, the angle θ between the second end wall 12121 and the axial direction R of the terminal post 12 is less than 90°. That is, along the direction from the penetration hole 12130 to the second side wall 12123, the second end wall 12121 extends inclinedly towards the direction away from the active material-coated portion 21.

Thus, the extension distance of the conductive portion 22 along the second end wall 12121 can be increased to enhance the reliability of the electrical connection. As an example, the angle θ between the second end wall 12121 and the axial direction R of the terminal post 12 may be 45°-90°, for example, 50°, 60°, 70°, 80°, etc. On the one hand, this can make the second end wall 12121 easy to machine and facilitate electrical connection with the conductive portion 22. On the other hand, it can more fully utilize the space within the terminal post 12 to accommodate the conductive portion 22.

Certainly, the present application is not limited to this. In other embodiments of the present application, it is also possible that the position of the electrical connection between the conductive portion 22 and the second end wall 12121 does not extend along the length or width direction of the second end wall 12121. It may also be a plurality of discretely arranged points. For instance, the conductive portion 22 has a plurality of spaced-apart portions separately welded to the second end wall 12121, which will not be elaborated here.

Please refer again to FIG. 20 and further refer to FIG. 21. FIG. 21 is a partial cross-sectional schematic view of a battery cell 10 provided in some embodiments of the present application. Regardless of the specific value of the angle θ between the second end wall 12121 and the axial direction R of the terminal post 12, in the embodiments of the present application, when the conductive portion 22 is electrically connected to the second end wall 12121, a second sunk groove 12122 may be provided on the second end wall 12121 as required. The second sunk groove 12122 is a groove formed by sinking of part of the second end wall 12121 towards an end close to the active material-coated portion 21. The position of electrical connection between the conductive portion 22 and the second end wall 12121 is at least partially located within the second sunk groove 12122.

In the aforementioned technical solution, the portion of the conductive portion 22 located within the second sunk groove 12122 and the second sunk groove 12122 are shaped to match each other and are attached to each other to achieve electrical connection. The second sunk groove 12122 can be used to pre-position and limit the electrical connection position of the conductive portion 22, which is beneficial for accurately locating the position to achieve electrical connection, improving the production efficiency, and enhancing the stability and reliability of the electrical connection position, thereby improving the reliability and stability of the charging and discharging operations of the battery cell 10.

Please refer again to FIG. 21. In the embodiments of the present application, the method of connection between the terminal post 12 and the case 11 is not limited. For example, it may be welding or riveting. For example, when the two cooperate by means of riveting, the case 11 has a through hole 113, and the terminal post 12 is rivetingly installed at the through hole 113. Certainly, it can be understood that when the two cooperate by means of welding or other methods, the case 11 may also be provided with a through hole 113, and the terminal post 12 is installed at the through hole 113.

Optionally, please refer again to FIG. 20. The second accommodation groove 12120 may be disposed corresponding to the position of the through hole 113. That is to say, on a projection plane perpendicular to the axial direction R of the terminal post 12, the orthographic projection of the second accommodation groove 12120 is located within the range of the orthographic projection of the through hole 113. This enables the second accommodation groove 12120 to have a relatively large depth to accommodate more conductive portions 22, thereby more significantly reducing the space occupied by the conductive portion 22 within the case 11.

In some embodiments, please refer again to FIG. 20. When the case 11 has the through hole 113 and the terminal post 12 is installed at the through hole 113, along the axial direction R of the terminal post 12, the depth H3 of the second accommodation groove 12120 is greater than or equal to the minimum distance H4 from the terminal post outer end surface 123 to the through hole 113.

It should be noted that the specific shape of the second accommodation groove 12120 is not limited, and it may be a regular shape or an irregular shape. For example, it may be a constant cross-section columnar groove with a rectangular, elliptical, or racetrack-shaped cross-section; or a trapezoidal groove with a rectangular cross-section and gradually varying cross-sectional dimensions; or a hemispherical groove with a circular cross-section and gradually varying cross-sectional dimensions; or a semi-ellipsoidal groove with an elliptical cross-section and gradually varying cross-sectional dimensions, etc. It is worth noting that the racetrack shape mentioned herein refers to a shape where the two short sides of a rectangle are replaced by outwardly convex curves.

Therefore, the depth H3 of the second accommodation groove 12120 refers to the maximum depth of the second accommodation groove 12120 along the axial direction R of the terminal post 12. Since along the axial direction R of the terminal post 12, the depth H3 of the second accommodation groove 12120 is greater than or equal to the minimum distance H4 from the terminal post outer end surface 123 to the through hole 113, the volume of the terminal post 12 can be fully utilized, enabling the second accommodation groove 12120 to have a relatively large depth. This is beneficial for accommodating more conductive portions 22, thereby more significantly reducing the space occupied by the conductive portion 22 within the case 11, further enhancing the energy density of the battery cell 10, and further reducing redundancy of the conductive portion 22 within the case 11. Meanwhile, since the second accommodation groove 12120 has a relatively large depth, it can also accommodate gas generated by the electrode assembly 2, thereby improving the reliability and stability of the battery cell 10, and it can also accommodate more electrolyte solution, thereby extending the service life of the battery cell 10.

Please refer to FIG. 21 and further refer to FIG. 22. FIG. 22 is a partial cross-sectional schematic view of a battery cell 10 provided in some embodiments of the present application. In an embodiment of the present application, when the accommodation portion 121 has the second accommodation groove 12120 according to any one of the aforementioned embodiments, optionally, the battery cell 10 may further include a cover plate 13. The cover plate 13 cooperates with the terminal post 12 and closes the groove opening of the second accommodation groove 12120. The cover plate 13 is electrically connected to the terminal post 12.

In the aforementioned technical solution, by providing the cover plate 13 to close the groove opening of the second accommodation groove 12120, leakage of the electrolyte solution within the case 11 from the groove opening of the second accommodation groove 12120 can be reduced. Moreover, since the cover plate 13 closes the groove opening of the second accommodation groove 12120 and is electrically connected to the terminal post 12, the cover plate 13 can be easily used to achieve indirect electrical connection between the terminal post 12 and a busbar component. Furthermore, this facilitates increasing the connection area at this electrical connection site, thereby facilitating reducing the resistance at this electrical connection site.

It should be noted that the cooperation method and cooperation position between the cover plate 13 and the terminal post 12 are not limited, as long as the cover plate 13 can close the groove opening of the second accommodation groove 12120. For example, in some embodiments, the cover plate 13 may be welded to the terminal post 12. During machining, the conductive portion 22 may first pass through the penetration hole 12130 and be welded to the groove wall of the second accommodation groove 12120. Then, the cover plate 13 may be welded to the terminal post 12 to close the groove opening of the second accommodation groove 12120.

It should also be noted that the specific composition of the cover plate 13 is not limited. For example, in some optional embodiments, please refer to FIG. 22. The cover plate 13 includes a first conductive member 131 and a second conductive member 132 made of different materials. The first conductive member 131 cooperates with and is electrically connected to the terminal post 12. The second conductive member 132 cooperates with and is electrically connected to the first conductive member 131.

In the aforementioned technical solution, by configuring the cover plate 13 in a composite form and setting the material of the first conductive member 131 to be the same as that of the terminal post 12, electrical connection between the first conductive member 131 and the terminal post 12 is facilitated. For example, reliable and stable connection between the first conductive member 131 and the terminal post 12 can be easily achieved through welding. Moreover, since the second conductive member 132 is made of a different material from the first conductive member 131, electrical connection with a busbar component or the like that is made of a material different from that of the terminal post 12 is facilitated using the second conductive member 132. For example, reliable and stable connection between the second conductive member 132 and a busbar component made of the same material as the second conductive member 132 can be easily achieved through welding.

For example, when the terminal post 12 is a negative terminal post 12, the terminal post 12 is a copper post, and the busbar component is an aluminum sheet, the first conductive member 131 may be made of copper, and the second conductive member 132 may be made of aluminum. At this time, the material of the terminal post 12 being the same as that of the first conductive member 131 allows effective welding, and the material of the second conductive member 132 being the same as that of the busbar component allows effective welding. Thus, indirect electrical connection between the terminal post 12 and the busbar component through the cover plate 13 can be effectively achieved. Furthermore, the welding between the terminal post 12 and the first conductive member 131 is welding between copper and copper, which has good fluidity and is less prone to cracks, which helps improve the sealing effect at the welding site.

Please refer again to FIG. 22. In some optional examples, the first conductive member 131 is located between the second accommodation groove 12120 and the second conductive member 132. In the aforementioned technical solution, since the first conductive member 131 is located between the second accommodation groove 12120 and the second conductive member 132, it can partition the second accommodation groove 12120 from the second conductive member 132. Thus, when the electrolyte solution within the case 11 enters the second accommodation groove 12120 through the penetration hole 12130, the first conductive member 131 can be used to reduce contact between this portion of electrolyte solution and the second conductive member 132, thereby solving the problem of corrosion of the second conductive member 132 caused by the electrolyte solution.

It should be noted that the cooperation method between the first conductive member 131 and the second conductive member 132 is not limited. For example, in some embodiments, please refer to FIG. 22. The first conductive member 131 has a second groove 1311, the second conductive member 132 is embedded in the second groove 1311, and the groove opening of the second groove 1311 is formed on the surface of a side of the first conductive member 131 facing away from the second accommodation groove 12120, such that the second conductive member 132 is exposed through the groove opening of the second groove 1311. Alternatively, in other embodiments, the method of connection between the first conductive member 131 and the second conductive member 132 may also be fastening connection, snap-fit connection, etc.

It should also be noted that " exposed" in " the second conductive member 132 is exposed through the groove opening of the second groove 1311" means: the position of the first conductive member 131 at the groove opening of the second groove 1311 does not block the second conductive member 132. It does not require the second conductive member 132 to protrude from the groove opening of the second groove 1311. For example, the second conductive member 132 may be flush with the surface of a side of the first conductive member 131 away from the second accommodation groove 12120, or the second conductive member 132 may protrude from the surface of the side of the first conductive member 131 away from the second accommodation groove 12120.

In the aforementioned technical solution, on the one hand, by embedding the second conductive member 132 in the first conductive member 131, the assembly difficulty of the first conductive member 131 and the second conductive member 132 can be reduced, the stability and convenience of cooperation between the first conductive member 131 and the second conductive member 132 can be improved, and the thickness of the cover plate 13 can be reduced to minimize the space occupied by the cover plate 13, thereby improving the space utilization rate of the battery cell 10. On the other hand, moreover, since the second conductive member 132 can be exposed from the surface of the side of the first conductive member 131 away from the second accommodation groove 12120 through the groove opening of the second groove 1311, electrical connection between the second conductive member 132 and a busbar component outside the terminal post 12 is facilitated.

Additionally, since the groove opening of the second groove 1311 is formed on the surface of the side of the first conductive member 131 away from the second accommodation groove 12120, it is indicated that the second groove 1311 opens toward the direction facing away from the active material-coated portion 21. Thus, the portion of the first conductive member 131 defining the groove wall of the second groove 1311 is located between the second accommodation groove 12120 and the second conductive member 132 to partition the second accommodation groove 12120 from the second conductive member 132, thereby preventing the electrolyte solution entering the second groove 1311 from contacting the second conductive member 132 and reducing leakage of the electrolyte solution.

Certainly, in other embodiments, the cover plate 13 may also not be a composite form composed of multiple materials. For example, in other embodiments of the present application, the cover plate 13 may also be entirely configured in a non-composite form made and machined using the same material, for example, to adapt to a positive terminal post 12, which will not be elaborated here.

Please refer again to FIG. 22. The cover plate 13 is further embedded at the groove opening of the second accommodation groove 12120. In the aforementioned technical solution, by embedding the cover plate 13 within the second accommodation groove 12120, the assembly difficulty between the cover plate 13 and the terminal post 12 can be reduced, the stability of assembly between the cover plate 13 and the terminal post 12 can be improved, and the reliability and convenience of connection can be enhanced. Moreover, the space occupation of the cover plate 13 outside the terminal post 12 can be reduced. Furthermore, since the cover plate 13 is embedded at the groove opening of the second accommodation groove 12120, sufficient space can be provided within the second accommodation groove 12120 to accommodate the conductive portion 22.

Certainly, in other embodiments of the present application, the method of cooperation between the cover plate 13 and the terminal post 12 is not limited to being embedded within the second accommodation groove 12120. The cover plate 13 may also be directly covered outside the terminal post 12, that is, directly disposed to cover the groove opening of the second accommodation groove 12120, as long as it facilitates cooperation with the busbar component of the battery 100. This embodiment does not impose limitations.

According to some embodiments of the present application, the present application further provides a battery 100, including the battery cell 10 according to the above solution.

In the technical solution of the embodiment of the present application, by providing a gas guide groove 81 on a mounting wall 114, the gas guide groove 81 can guide air inside a case 11 to flow toward an explosion-proof valve 6, facilitating improving the exhaust efficiency of the battery cell 10 and achieving rapid pressure relief for the battery cell 10. As compared to separately providing a gas guide assembly inside the battery cell 10, providing the gas guide groove 81 in the mounting wall 114 to form the gas guide portion 80 facilitates reducing space occupied by the gas guide portion 80 within the battery cell 10.

According to some embodiments of the present application, the present application further provides an electrical apparatus, including a battery 100 according to the above solution, and the battery 100 is configured to provide electrical energy for the electrical apparatus. The electrical apparatus may be any device or system applying the battery as described above.

In the technical solution of the embodiment of the present application, by providing a gas guide groove 81 on a mounting wall 114, the gas guide groove 81 can guide air inside a case 11 to flow toward an explosion-proof valve 6, facilitating improving the exhaust efficiency of the battery cell 10 and achieving rapid pressure relief for the battery cell 10. As compared to separately providing a gas guide assembly inside the battery cell 10, providing the gas guide groove 81 in the mounting wall 114 to form the gas guide portion 80 facilitates reducing space occupied by the gas guide portion 80 within the battery cell 10.

According to some embodiments of the present application, a battery cell 10 is provided. The battery cell 10 includes a case 11, an electrode assembly 2, an explosion-proof valve 6, and a gas guide portion 80. The electrode assembly 2 is disposed within the case 11.

The case 11 includes a case body 111 and a case cover 112. The case body 111 has an opening 1110, and the case cover 112 is disposed to cover the opening 1110 to form an internal environment of the battery cell 10, where the electrode assembly 2 is disposed in the internal environment. The case cover 112 forms a mounting wall 114. The explosion-proof valve 6 includes a pressure relief groove 60, where the pressure relief groove 60 is formed in the mounting wall 114. The gas guide portion 80 includes a gas guide groove 81, where the gas guide groove 81 is formed in the mounting wall 114. The gas guide groove 81 is configured to guide gas generated by the electrode assembly 2 to the pressure relief groove 60.

By performing laser cutting or CNC punching or other processing on the mounting wall 114, the pressure relief groove 60 and the gas guide groove 81 can be formed on the mounting wall 114. The mounting wall 114 includes a first wall portion 1143 and a second wall portion 1144. After the gas guide groove 81 is provided on the mounting wall 114, the wall portion of the mounting wall 114 corresponding to the gas guide groove 81 in the Z-direction is the first wall portion 1143. After providing the pressure relief groove 60 on the mounting wall 114, the wall portion of the mounting wall 114 corresponding to the pressure relief groove 60 in the Z-direction is the second wall portion 1144, where the second wall portion 1144 is formed as the explosion-proof valve 6.

The depth H1 of the gas guide groove 81 is set to be less than the depth H2 of the pressure relief groove 60, so as to control the thickness of the first wall portion 1143 to be greater than the thickness of the second wall portion 1144, thereby causing the structural strength of the first wall portion 1143 to be greater than the structural strength of the second wall portion 1144. In this way, when the gas pressure inside the battery cell 10 reaches the critical value, gas will preferentially rupture the second wall portion 1144, that is, preferentially destroy the explosion-proof valve 6.

In some embodiments, the gas guide groove 81 and the pressure relief groove 60 are both disposed on a side of the mounting wall 114 facing the inner cavity of the case 11. In some other embodiments, the gas guide groove 81 is disposed on the side of the mounting wall 114 facing the inner cavity of the case 11, and the pressure relief groove 60 is disposed on a side of the mounting wall 114 facing away from the inner cavity of the case 11.

The pressure relief groove 60 includes a first pressure relief groove segment 61 and a second pressure relief groove segment 62 arranged in an intersecting configuration, where the first pressure relief groove segment 61 extends along a length direction of the mounting wall 114, the second pressure relief groove segment 62 extends along a width direction of the mounting wall 114, and the first pressure relief groove segment 61 and the second pressure relief groove segment 62 are in communication with each other. Such a configuration facilitates increasing the areas of the first pressure relief groove segment 61 and the second pressure relief groove segment 62, thereby increasing the area of the explosion-proof valve 6. This enables gas to be evenly distributed within the first pressure relief groove segment 61 and the second pressure relief groove segment 62. When the air pressure inside the battery cell 10 reaches a critical value, the forming of a relatively large opening 1110 is facilitated when the gas ruptures the explosion-proof valve 6, thereby facilitating achieving rapid pressure relief for the battery cell 10.

The gas guide groove 81 includes a first gas guide groove segment 811 and a second gas guide groove segment 812, where the first gas guide groove segment 811 extends along the length direction of the mounting wall 114, the second gas guide groove segment 812 extends along the width direction of the mounting wall 114, and the first gas guide groove segment 811 and the second gas guide groove segment 812 are in communication with each other. Such a configuration facilitates increasing the volume of the gas guide groove 81, enabling the gas guide groove 81 to accommodate more gas, thereby facilitating improving the flow guiding efficiency of the gas guide groove 81, where gas in the second gas guide groove 81 can enter the first gas guide groove 81 and flow toward the explosion-proof valve 6 along the first gas guide groove 81.

Two gas guide portions 80 are provided, and the explosion-proof valve 6 is located between the two gas guide portions 80. The explosion-proof valve 6 may be located at a central position of the mounting wall 114, or may be disposed offset from the central position of the mounting wall 114. The specific position may be determined according to actual requirements and is not limited here.

When the explosion-proof valve 6 is disposed offset from the central position of the mounting wall 114, the area of the gas guide portion 80 on one side of the explosion-proof valve 6 is larger, and the area of the gas guide portion 80 on the other side of the explosion-proof valve 6 is smaller.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments may still be modified, or some or all of the technical features therein may be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the particular Examples disclosed herein, but rather includes all technical solutions falling within the scope of the claims.

## Claims

1. A battery cell, comprising:
a case comprising a mounting wall;
an electrode assembly disposed within the case;
an explosion-proof valve disposed on the mounting wall; and
a gas guide portion comprising a gas guide groove formed in the mounting wall, the gas guide groove being configured to guide gas generated by the electrode assembly toward the explosion-proof valve.

2. The battery cell according to claim 1, wherein the explosion-proof valve comprises a pressure relief groove formed in the mounting wall.

3. The battery cell according to claim 2, wherein a depth of the gas guide groove is less than a depth of the pressure relief groove.

4. The battery cell according to claim 2 or 3, wherein the gas guide groove and the pressure relief groove are both disposed on a side of the mounting wall facing an inner cavity of the case.

5. The battery cell according to claim 2 or 3, wherein the gas guide groove is disposed on a side of the mounting wall facing an inner cavity of the case, and the pressure relief groove is disposed on a side of the mounting wall facing away from the inner cavity of the case.

6. The battery cell according to any one of claims 2 to 5, wherein the gas guide groove is spaced apart from the pressure relief groove; or, the gas guide groove is in communication with the pressure relief groove.

7. The battery cell according to any one of claims 2 to 6, wherein the pressure relief groove comprises a first pressure relief groove segment and a second pressure relief groove segment arranged in an intersecting configuration.

8. The battery cell according to claim 7, wherein the first pressure relief groove segment extends along a length direction of the mounting wall, and the second pressure relief groove segment extends along a width direction of the mounting wall.

9. The battery cell according to any one of claims 1 to 8, wherein the gas guide groove and the explosion-proof valve are arranged along a length direction of the mounting wall, and the gas guide groove comprises:
a first gas guide groove segment, the first gas guide groove segment extending along the length direction of the mounting wall.

10. The battery cell according to claim 9, wherein there are a plurality of the first gas guide groove segments, and the plurality of first gas guide groove segments are spaced apart along a width direction of the mounting wall.

11. The battery cell according to claim 10, wherein, in each of the gas guide grooves, a distance between any two adjacent ones of the first gas guide groove segments is equal.

12. The battery cell according to claim 10, wherein, in each of the gas guide grooves, a distance between at least two adjacent ones of the first gas guide groove segments is not equal to a distance between another two adjacent ones of the first gas guide groove segments.

13. The battery cell according to any one of claims 9-12, wherein the gas guide groove further comprises:
a second gas guide groove segment, the second gas guide groove segment extending along a width direction of the mounting wall, wherein one end of the first gas guide groove segment away from the explosion-proof valve is in communication with the second gas guide groove segment and the other end extends toward the explosion-proof valve.

14. The battery cell according to any one of claims 1-13, wherein two said gas guide portions are provided, the two gas guide portions being spaced apart in a length direction of the mounting wall, and the explosion-proof valve being located between the two gas guide portions.

15. The battery cell according to claim 14, wherein the explosion-proof valve is disposed at a central position in the length direction of the mounting wall, and the two gas guide portions have the same structure and are arranged symmetrically about a center of the explosion-proof valve.

16. The battery cell according to claim 14, wherein the mounting wall has a first end and a second end opposite to each other in the length direction of the mounting wall, a distance between the explosion-proof valve and the first end being greater than a distance between the explosion-proof valve and the second end;
wherein the area of the gas guide portion located between the explosion-proof valve and the first end is greater than the area of the gas guide portion located between the explosion-proof valve and the second end.

17. The battery cell according to any one of claims 1-16, wherein the case comprises a case cover and a case body having an opening, the case cover being disposed to cover the opening, and the mounting wall being located on the case cover or the case body.

18. The battery cell according to any one of claims 1-16, wherein the case comprises a case cover and a case body having an opening, the case cover being disposed to cover the opening, and the mounting wall being located on the case cover, wherein a wall body of the case body opposite to the mounting wall is provided with a terminal post, the terminal post being provided with an accommodation portion; and
the electrode assembly comprises an active material-coated portion and a conductive portion connected to the active material-coated portion, at least a portion of the conductive portion extending into the accommodation portion and being connected to the terminal post.

19. The battery cell according to claim 18, wherein the accommodation portion comprises a first accommodation groove, and a surface of a side of the terminal post facing the active material-coated portion is a terminal post inner end surface, wherein a groove opening of the first accommodation groove is formed on the terminal post inner end surface, and at least a portion of the conductive portion is accommodated within the first accommodation groove.

20. The battery cell according to claim 18, wherein the accommodation portion comprises a second accommodation groove, and a surface of a side of the terminal post away from the active material-coated portion is a terminal post outer end surface, wherein a groove opening of the second accommodation groove is formed on the terminal post outer end surface, the second accommodation groove is in communication with an interior of the case through a penetration hole, and the conductive portion passes through the penetration hole and at least a portion thereof is accommodated within the second accommodation groove.

21. A battery, comprising the battery cell according to any one of claims 1-20.

22. An electrical apparatus, comprising the battery according to claim 21.
